(19) Europäisches Patentamt
European Patent Office
Office européen des brevets

(11) EP 4 631 995 A1

(12) **EUROPEAN PATENT APPLICATION**
published in accordance with Art. 153(4) EPC

(43) Date of publication:
**15.10.2025 Bulletin 2025/42**

(21) Application number: **23900645.5**

(22) Date of filing: **05.12.2023**

(51) International Patent Classification (IPC):
***C08G 77/60*** *(2006.01)* ***G02B 1/04*** *(2006.01)*

(52) Cooperative Patent Classification (CPC):
**C08G 77/60; G02B 1/04**

(86) International application number:
**PCT/JP2023/043417**

(87) International publication number:
**WO 2024/122530 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.12.2022 JP 2022195235**

(71) Applicant: **MITSUBISHI GAS CHEMICAL COMPANY, INC.**
**Chiyoda-ku**
**Tokyo 100-8324 (JP)**

(72) Inventors:
- **AKIMOTO Hisato**
  **Tokyo 125-8601 (JP)**
- **SAKAI Kentaro**
  **Tokyo 125-8601 (JP)**
- **TAGUCHI Daisuke**
  **Tokyo 125-8601 (JP)**
- **KAMATANI Kohei**
  **Tokyo 125-8601 (JP)**
- **UERA Kazuyoshi**
  **Tokyo 125-8601 (JP)**
- **KATO Noriyuki**
  **Tokyo 100-8324 (JP)**
- **ISHIHARA Kentaro**
  **Tokyo 100-8324 (JP)**
- **NISHIMORI Katsushi**
  **Tokyo 125-8601 (JP)**
- **MOTEGI Atsushi**
  **Tokyo 125-8601 (JP)**

(74) Representative: **Hoffmann Eitle**
**Patent- und Rechtsanwälte PartmbB**
**Arabellastraße 30**
**81925 München (DE)**

(54) **THERMOPLASTIC RESIN, MOLDED BODY CONTAINING THERMOPLASTIC RESIN, AND OPTICAL LENS**

(57) The present invention addresses the problem of providing: a thermoplastic resin which has excellent properties, moldability and the like in optical applications; and a molded article containing such a thermoplastic resin. The solution of the problem may include a thermoplastic resin containing: a silane constituent unit (S) which is a constituent unit derived from at least one silane compound selected from among a predetermined dialkoxysilane compound, a diaryloxysilane compound, and a monoalkoxymonoaryloxysilane compound; a fluorene constituent unit (F) which is a constituent unit derived from a fluorene ring-containing dihydroxy compound; and a dinaphthalene constituent unit (N) which is a constituent unit derived from a dinaphthalene-containing dihydroxy compound.

EP 4 631 995 A1

## Description

TECHNICAL FIELD

The present invention relates to a thermoplastic resin, in particular, a thermoplastic resin containing a constituent unit derived from a silane compound and the like, a molded body containing the thermoplastic resin, and others.

BACKGROUND ART

Conventionally, various thermoplastic resins have been used in a wide range of fields. Thermoplastic resins are formed into a variety of molded products by methods, such as injection molding, and are utilized in a wide range of industrial fields, such as electrical and electronics, OA equipment, heavy electrical machinery, precision machinery, and automotive fields.

Polymers of aromatic polysiloxane, also referred to as so-called polyarylenesiloxane, are known as thermoplastic resins used as materials for molded products and the like (for example, Patent Literature 1 and Patent Literature 2). In recent years, the importance of polysiloxane compounds such as polyarylenesiloxane has been growing, and polyarylenesiloxane is used as, for example, release layers in photocopying, photoresist materials, plasticizers for resins such as polycarbonate resins, or components in powder surface coating systems.

PRIOR ART DOCUMENTS

PATENT DOCUMENTS

Patent Literature 1: Japanese Translation of PCT International Application Publication No. 1996-502537
Patent Literature 2: Japanese Translation of PCT International Application Publication No. 2015-512999

SUMMARY OF THE INVENTION

PROBLEMS TO BE SOLVED BY THE INVENTION

Conventional thermoplastic resins do not always have properties suited for specific applications, and thermoplastic resins with excellent properties have been needed as, for example, materials for molded products in optical applications. In addition, it cannot be said that the process of producing molded products from conventional thermoplastic resins has always been simple, and thermoplastic resins with sufficient moldability have been desired.

Accordingly, there is a need for a new thermoplastic resin from the viewpoint of properties in optical applications, moldability, and other factors.

MEANS FOR SOLVING THE PROBLEMS

The present invention provides a thermoplastic resin, a molded product containing the thermoplastic resin, and others as described below.

[1] A thermoplastic resin comprising:

a silane constituent unit (S), which is a constituent unit derived from at least any silane compound of
a dialkoxysilane compound including at least any of a dialkyldialkoxysilane, a diaryldialkoxysilane, and a monoalkylmonoaryldialkoxysilane,
a diaryloxysilane compound including at least any of a dialkyldiaryloxysilane, a diaryldiaryloxysilane, and a monoalkylmonoaryldiaryloxysilane, and
a monoalkoxymonoaryloxysilane compound including at least any of a dialkylmonoalkoxymonoaryloxysilane, a diarylmonoalkoxymonoaryloxysilane, and a monoalkylmonoarylmonoalkoxymonoaryloxysilane compound;
a fluorene constituent unit (F), which is a constituent unit derived from a fluorene ring-containing dihydroxy compound; and
a dinaphthalene constituent unit (N), which is a constituent unit derived from a dinaphthalene-containing dihydroxy compound.

[2] The thermoplastic resin according to the above [1], comprising a constituent unit represented by the following general formula (1):

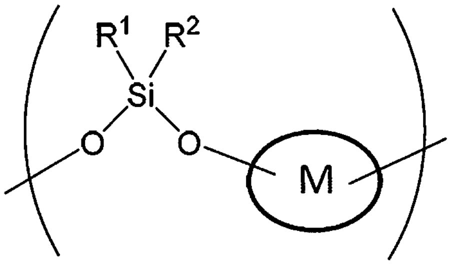

(1)

wherein $R^1$ and $R^2$ each independently represent an alkyl group having 1 to 20 carbon atoms and optionally having a substituent or an aryl group having 6 to 30 carbon atoms and optionally having a substituent;
M represents a dihydroxy compound-derived constituent unit (A); and
the constituent unit (A) comprises the fluorene constituent unit (F) and the dinaphthalene constituent unit (N).

[3] The thermoplastic resin according to the above [1] or [2], wherein the dinaphthalene-containing dihydroxy compound is represented by the following general formula (2):

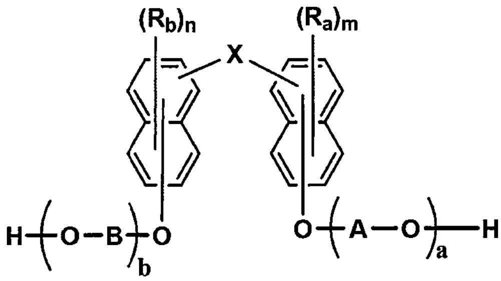

(2)

wherein $R_a$ and $R_b$ are each independently selected from the group consisting of a hydrogen atom, a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, an aryl group having 6 to 20 carbon atoms and optionally having a substituent, a heteroaryl group having 6 to 20 carbon atoms and optionally having a substituent, which contains one or more heterocycle atoms selected from O, N, and S, an aryloxy group having 6 to 20 carbon atoms and optionally having a substituent, and $-C{\equiv}C-R_h$;
$R_h$ represents an aryl group having 6 to 20 carbon atoms and optionally having a substituent, or a heteroaryl group having 6 to 20 carbon atoms and optionally having a substituent, which contains one or more heterocycle atoms selected from O, N, and S;
X represents a single bond or a fluorene group optionally having a substituent;
A and B each independently represent an alkylene group having 1 to 5 carbon atoms and optionally having a substituent;
m and n each independently represent an integer of 0 to 6; and
a and b each independently represent an integer of 0 to 10.

[4] The thermoplastic resin according to any of the above [1] to [3], wherein the fluorene ring-containing dihydroxy compound is represented by the following general formula (3):

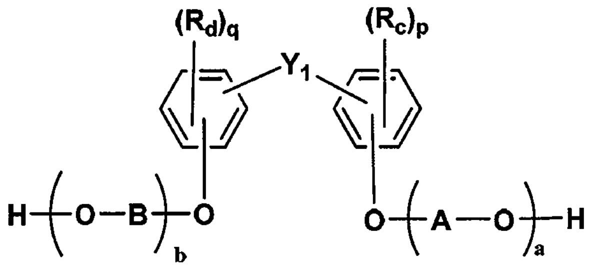

(3)

wherein $R_c$ and $R_d$ are each independently selected from the group consisting of a hydrogen atom, a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, and an aryl group having 6 to 20 carbon atoms and optionally having a substituent;
$Y_1$ represents a fluorene group;
A and B each independently represent an alkylene group having 1 to 5 carbon atoms and optionally having a substituent;
p and q each independently represent an integer of 0 to 4; and
a and b each independently represent an integer of 0 to 10.

[5] The thermoplastic resin according to any of the above [1] to [4], wherein the silane constituent unit (S) comprises a constituent unit derived from any of diphenyldimethoxysilane or dimethyldiphenoxysilane.
[6] The thermoplastic resin according to any of the above [3] to [5], wherein the compound of the general formula (2) includes any of 2NBN and DPBN.
[7] The thermoplastic resin according to any of the above [4] to [6], wherein the compound of the general formula (3) includes any of BNEF, BPEF, and BPPEF.
[8] The thermoplastic resin according to any of the above [1] to [7], wherein a content of the fluorene constituent unit (F) is 30 to 95% by mol and a content of the dinaphthalene constituent unit (N) is 5 to 70% by mol based on a total number of moles of the fluorene constituent unit (F) and the dinaphthalene constituent unit (N).
[9] The thermoplastic resin according to any of the above [1] to [8], wherein the thermoplastic resin has a weight average molecular weight (Mw) in terms of polystyrene of 5,000 to 100,000.
[10] The thermoplastic resin according to any of the above [1] to [9], wherein the thermoplastic resin has a refractive index (nD) of 1.670 to 1.750.
[11] The thermoplastic resin according to any of the above [1] to [10], wherein the thermoplastic resin has an Abbe number (v) of 15.0 to 23.0.
[12] The thermoplastic resin according to any of the above [1] to [11], wherein the thermoplastic resin has a glass transition temperature of 100 to 150°C.
[13] A thermoplastic resin composition comprising the thermoplastic resin according to any of the above [1] to [12] and a low molecular weight body with a weight average molecular weight (Mw) of 1,000 or less, wherein a content of the low molecular weight body is 15% by mass or less based on an area ratio in GPC analysis.
[14] The thermoplastic resin composition according to the above [13], wherein the thermoplastic resin contains a low molecular weight body represented by the following general formula (T):

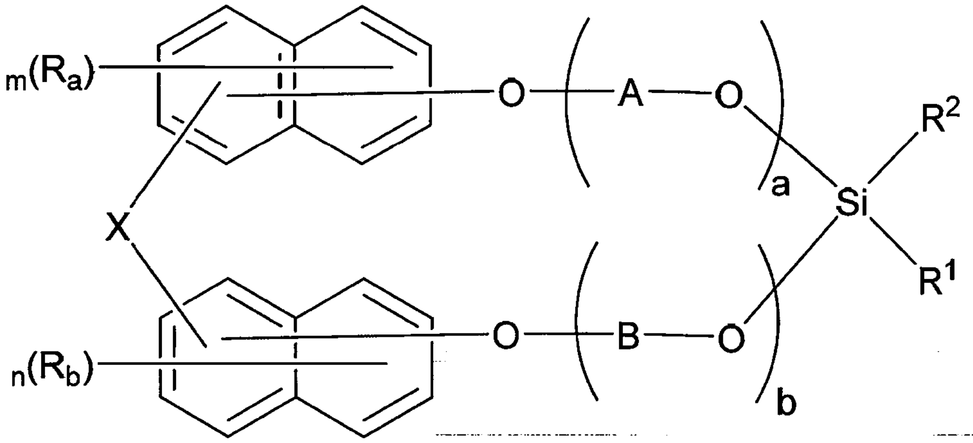

(T)

wherein $R^1$ and $R^2$ each independently represent an alkyl group having 1 to 20 carbon atoms and optionally having a substituent or an aryl group having 6 to 30 carbon atoms and optionally having a substituent;
$R_a$ and $R_b$ are each independently selected from the group consisting of a hydrogen atom, a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, an aryl group having 6 to 20 carbon atoms and optionally having a substituent, a heteroaryl group having 6 to 20 carbon atoms and optionally having a substituent, which contains one or more heterocycle atoms selected from O, N, and S, an aryloxy group having 6 to 20 carbon atoms and optionally having a substituent, and $-C{\equiv}C-R_h$;
$R_h$ represents an aryl group having 6 to 20 carbon atoms and optionally having a substituent, or a heteroaryl group having 6 to 20 carbon atoms and optionally having a substituent, which contains one or more heterocycle atoms selected from O, N, and S;
X represents a single bond or a fluorene group optionally having a substituent;
A and B each independently represent an alkylene group having 1 to 5 carbon atoms and optionally having a substituent;
m and n each independently represent an integer of 0 to 6; and
a and b each independently represent an integer of 0 to 10.

[15] A molded body comprising the thermoplastic resin according to any of the above [1] to [12] or the thermoplastic resin composition according to any of the above [13] and [14].
[16] The molded body according to the above [15], wherein the molded body is an optical lens.
[17] A method for producing the thermoplastic resin according to any of the above [1] to [12], wherein the method comprises:

a polymerization step of polymerizing the silane compound, the fluorene ring-containing dihydroxy compound, and the dinaphthalene-containing dihydroxy compound in the presence of a polymerization catalyst.
[18] The method for producing the thermoplastic resin according to the above [17], wherein the polymerization catalyst comprises at least a metal acetate.

Advantageous Effects of Invention

According to the present invention, a thermoplastic resin with excellent properties, such as high refractive index, and high moldability, as well as a molded body, such as optical lens, containing such a thermoplastic resin, can be realized.

Description of Embodiments

A thermoplastic resin of the present invention contains a silane constituent unit (S), a fluorene constituent unit (F), and a dinaphthalene constituent unit (N).
The silane constituent unit (S) is a constituent unit derived from a dialkoxysilane compound, the fluorene constituent unit (F) is a constituent unit derived from a fluorene ring-containing dihydroxy compound, and the dinaphthalene constituent unit (N) is a constituent unit derived from a dinaphthalene-containing dihydroxy compound.
Examples of the type of thermoplastic resins include polycarbonate resin, polyester resin, and polyester

carbonate resin. Hereinafter, the thermoplastic resin will be described in detail.

[I. Thermoplastic resin]

<I-1. Types of constituent units>

(1) Silane constituent unit (S)

The silane constituent unit (S) in the thermoplastic resin is, for example, a constituent unit containing a silyl ether bond moiety in the following formula (1), that is, a constituent unit containing a -OSi($R^1R^2$)O- moiety. For this reason, the type of silane compound used for polymerization of the thermoplastic resin can be selected as appropriate, depending on the type of silane constituent unit (S) formed in the main chain.

Note that the silane constituent unit (S) acts as a linking group that links the fluorene constituent unit (F) and the dinaphthalene constituent unit (N), the fluorene constituent units (F) to each other, or the dinaphthalene constituent units (N) to each other, and the silane compound for forming the silane constituent unit (S) is hereinafter also referred to as linking agent.

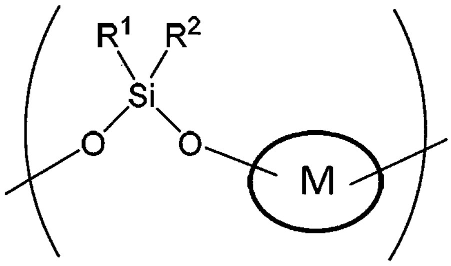

(1)

$R^1$ and $R^2$ in the above formula (1) are each independently an alkyl group having 1 to 20 carbon atoms and optionally having a substituent or an aryl group having 6 to 30 carbon atoms and optionally having a substituent. When $R^1$ and $R^2$ in the silane constituent unit (S) are each an alkyl group optionally having a substituent, the number of carbon atoms in total is preferably 1 to 14 or 1 to 10, the number of carbon atoms in total is more preferably 1 to 6, and the number of carbon atoms in total is particularly preferably 1 or 2.

Also, when $R^1$ and $R^2$ in the silane constituent unit (S) are each an aryl group optionally having a substituent, the number of carbon atoms in total is preferably 6 to 20, the number of carbon atoms in total is more preferably 6 to 12, and the number of carbon atoms in total is particularly preferably 6 to 8.

Examples of the above-mentioned substituent in the silane constituent unit (S) include a hydroxyl group, a halogen, an amino group, a vinyl group, a carboxyl group, a cyano group, a (meth)acryloxy group, a glycidyloxy group, and a mercapto group. When the silane constituent unit (S) contains a substituent, the range of the above-mentioned number of carbon atoms is for the total number of carbon atoms, including the number of carbon atoms in the substituent.

Preferred specific examples of $R^1$ and $R^2$ include a methyl group, an ethyl group, a propyl group, a phenyl group, and a benzyl group, and more preferred examples thereof include a methyl group and a phenyl group.

The silane compound for forming the above-mentioned silane constituent unit (S) containing $R^1$ and $R^2$ includes at least any selected from a dialkoxysilane compound, a diaryloxysilane compound, and a monoalkoxymonoaryloxysilane compound.

The dialkoxysilane compound includes at least any of a dialkyldialkoxysilane, a diaryldialkoxysilane, and a monoalkylmonoaryldialkoxysilane.

The diaryloxysilane compound includes at least any of a dialkyldiaryloxysilane, a diaryldiaryloxysilane, and a monoalkylmonoaryldiaryloxysilane.

Also, the monoalkoxymonoaryloxysilane compound includes at least any of a dialkylmonoalkoxymonoaryloxysilane, a diarylmonoalkoxymonoaryloxysilane, and a monoalkylmonoarylmonoalkoxymonoaryloxysilane compound.

Then, when the silane compound forming the silane constituent unit (S) is represented by the general formula $Si(R^1R^2)(OR^3)_2$, $R^1$ and $R^2$ are each independently selected from an alkyl group having 1 to 20 carbon atoms and optionally having a substituent and an aryl group having 6 to 30 carbon atoms and optionally having a substituent, as shown in the above formula (1). Preferred forms of $R^1$ and $R^2$ are as mentioned above.

Furthermore, the $OR^3$ group in the general formula $Si(R^1R^2)(OR^3)_2$ of the silane compound each independently represents any of an alkoxy group and an aryloxy group. The two $-OR^3$ groups in the silane compound, which are alkoxy groups and/or aryloxy groups, are not introduced into the polymer chain (main chain) of the thermoplastic resin, and generate by-products, such as methanol and phenol (MeOH and PhOH), for example. For this reason, there is no

particular limitation on the type of alkoxy group or aryloxy group. However, in order to remove the by-products in the polymerization step as easily as possible from the reaction system, an aryloxy group and an alkoxy group with a relatively small number of carbon atoms are preferable, and for example, an aryloxy group having 8 or less carbon atoms or an alkoxy group having 3 or less carbon atoms is preferable, a phenoxy group (-$OC_6H_5$ group), a benzyloxy group, a methoxy group, an ethoxy group, or the like is more preferable, and a phenoxy group or a methoxy group is particularly preferable.

Preferred specific examples of the silane compound include dimethyldiphenoxysilane, dimethyldimethoxysilane, methylethyldimethoxysilane, diethyldimethoxysilane, diphenyldimethoxysilane, and methylphenyldimethoxysilane. More preferred specific examples of the silane compound include diphenyldimethoxysilane and dimethyldiphenoxysilane.

As a silane compound constituting a silane constituent unit (S), a single type of dialkoxysilane compound may be used, or several types of dialkoxysilane compounds may be used in combination.

M, schematically shown in the above formula (1), includes the dinaphthalene constituent unit (N) and the fluorene constituent unit (F). The dinaphthalene constituent unit (N) and the fluorene constituent unit (F) are bonded to the silane constituent unit at their terminals. Hereinafter, the dinaphthalene constituent unit (N) and the fluorene constituent unit (F) will be described in detail.

(2) Dinaphthalene constituent unit (N)

The dinaphthalene constituent unit (N) is derived from a dinaphthalene-containing dihydroxy compound. It is preferable that the dinaphthalene-containing dihydroxy compound for forming the dinaphthalene constituent unit (N) be selected from, for example, those represented by the following formula (2).

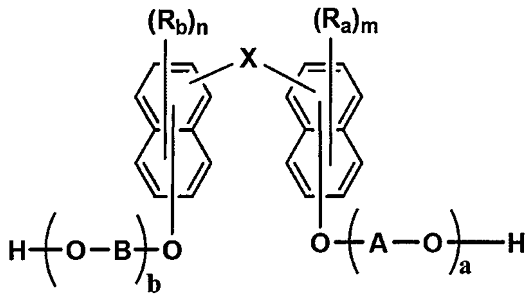

(2)

In general formula (2), Ra and Rb are each independently selected from the group consisting of a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, an aryl group having 6 to 20 carbon atoms and optionally having a substituent, a heteroaryl group having 6 to 20 carbon atoms and optionally having a substituent, which contains one or more heterocycle atoms selected from O, N, and S, an aryloxy group having 6 to 20 carbon atoms and optionally having a substituent, and -C≡C-Rh. Rh represents an aryl group having 6 to 20 carbon atoms and optionally having a substituent, or a heteroaryl group having 6 to 20 carbon atoms and optionally having a substituent, which contains one or more heterocycle atoms selected from O, N, and S.

Ra and Rb are preferably a hydrogen atom, an aryl group having 6 to 20 carbon atoms and optionally having a substituent, or a heteroaryl group having 6 to 20 carbon atoms and optionally having a substituent, which contains one or more heterocycle atoms selected from O, N, and S, more preferably a hydrogen atom or an aryl group having 6 to 20 carbon atoms and optionally having a substituent, and still more preferably a hydrogen atom or an aryl group having 6 to 12 carbon atoms and optionally having a substituent.

In general formula (2), X represents a single bond or a fluorene group optionally having a substituent. X is preferably a single bond or a fluorene group having 12 to 20 carbon atoms in total and optionally having a substituent.

In general formula (2), A and B are each independently an alkylene group having 1 to 5 carbon atoms and optionally having a substituent, and preferably an alkylene group having 2 or 3 carbon atoms.

In general formula (2), m and n are each independently an integer of 0 to 6, preferably an integer of 0 to 3, and more preferably 0 or 1.

In general formula (2), a and b are each independently an integer of 0 to 10, preferably an integer of 1 to 3, and more preferably 1 or 2.

Examples of the above-mentioned substituent in the dinaphthalene constituent unit (N) include a hydroxyl group, a halogen, an amino group, a vinyl group, a carboxyl group, a cyano group, a (meth)acryloxy group, a glycidyloxy group, and a mercapto group. When the dinaphthalene constituent unit (N) contains a substituent, the range of the above-mentioned number of carbon atoms is for the total number of carbon atoms, including the number of carbon atoms in the

substituent.

Specific examples of the dinaphthalene constituent unit (N) include those derived from 2,2'-bis(2-hydroxyethoxy)-6,6'-diphenyl-1,1'-binaphthalene (DPBN), 2,2'-bis(2-hydroxyethoxy)-6,6'-di(naphthalen-2-yl)-1,1'-binaphthalene (2NBN), 2,2'-bis(2-hydroxyethoxy)-1,1'-binaphthalene (BNE), and the like, and it is more preferably a constituent unit derived from DPBN, 2NBN, or the like.

In the thermoplastic resin containing the dinaphthalene constituent unit (N) as described above, the effect of higher heat resistance is recognized compared to thermoplastic resins containing a constituent unit containing an alicyclic ring derived from an alicyclic diol, a constituent unit containing a monocyclic aromatic ring derived from a bisphenol, and the like.

(3) Fluorene constituent unit (F)

The fluorene constituent unit (F) is derived from a fluorene ring-containing dihydroxy compound. It is preferable that the fluorene ring-containing dihydroxy compound be one represented by the following general formula (3), for example.

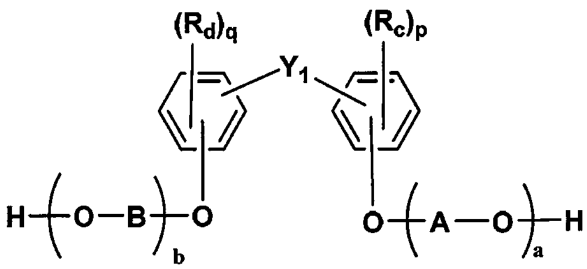
(3)

In general formula (3), Rc and Rd are each independently selected from the group consisting of a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, and an aryl group having 6 to 20 carbon atoms and optionally having a substituent.

Rc and Rd are preferably a hydrogen atom, an aryl group having 6 to 20 carbon atoms and optionally having a substituent, or a heteroaryl group having 6 to 20 carbon atoms and optionally having a substituent, which contains one or more heterocycle atoms selected from O, N, and S, more preferably a hydrogen atom or an aryl group having 6 to 20 carbon atoms and optionally having a substituent, and still more preferably a hydrogen atom or an aryl group having 6 to 12 carbon atoms and optionally having a substituent.

In general formula (3), $Y_1$ contains at least a fluorene group optionally having a substituent. However, in the thermoplastic resin, in addition to the fluorene constituent unit (F) in which $Y_1$ is a fluorene group optionally having a substituent, a fluorene constituent unit with different $Y_1$ may also be contained. That is, in general formula (3), $Y_1$ may be a single bond or any of structural formulas represented by the following formulas (8) to (14), and is preferably a fluorene group, a single bond, or a structural formula represented by the following formula (8).

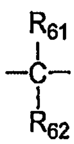
(8)

$-S-$
(9)

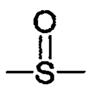
(10)

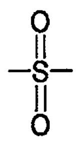
(11)

$-(CH_2)_r-$
(12)

$-O-$
(13)

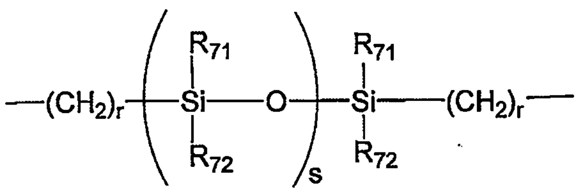
(14)

In formulas (8) to (14), $R_{61}$, $R_{62}$, $R_{71}$, and $R_{72}$ each independently represent a hydrogen atom, a halogen atom, an alkyl group having 1 to 20 carbon atoms and optionally having a substituent, or an aryl group having 6 to 30 carbon atoms

and optionally having a substituent, or $R_{61}$ and $R_{62}$ or $R_{71}$ and $R_{72}$ are bonded to each other to form and represent a carbocycle or heterocycle having 1 to 20 carbon atoms and optionally having a substituent.

In formulas (8) to (14), r and s are each independently an integer of 0 to 5000.

In the above general formula (3), A and B are each independently an alkylene group having 1 to 5 carbon atoms and optionally having a substituent, and preferably an alkylene group having 2 or 3 carbon atoms. In the above general formula (3), p and q are each independently an integer of 0 to 4, and preferably 0 or 1. Also, in the above general formula (3), a and b are each independently an integer of 0 to 10, preferably an integer of 0 to 5, and more preferably an integer of 0 to 2, such as 0 or 1.

Examples of the above-mentioned substituent in the fluorene constituent unit (F) include a hydroxyl group, a halogen, an amino group, a vinyl group, a carboxyl group, a cyano group, a (meth)acryloxy group, a glycidyloxy group, and a mercapto group. When the fluorene constituent unit (F) contains a substituent, the range of the above-mentioned number of carbon atoms is for the total number of carbon atoms, including the number of carbon atoms in the substituent.

Specific examples of the fluorene constituent unit (F) include those derived from BPEF (9,9-bis(4-(2-hydroxyethoxy)phenyl)fluorene), BPPEF (9,9-bis(4-(2-hydroxyethoxy)-3-phenylphenyl)fluorene), 9,9-bis[6-(2-hydroxyethoxy) naphthalen-2-yl]fluorene (BNEF), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanolfluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene) bis(2-methylphenol)), TrisP-HAP (4,4',4"-ethylidenetrisphenol), and the like.

Among these, more preferred specific examples of the fluorene constituent unit (F) include one derived from BNEF, BPEF, or BPPEF.

Note that the fluorene ring-containing dihydroxy compound, which is the compound for forming the fluorene constituent unit (F), is hereinafter also referred to as component A, and the dinaphthalene-containing dihydroxy compound, which is the compound for forming the above-mentioned dinaphthalene constituent unit (N), is hereinafter also referred to as component B.

When the component B is used together with the component A and they are copolymerized, a thermoplastic resin with a high refractive index can be obtained. Also, in a thermoplastic resin produced using the component B, it is easily possible to contain a moderate amount of a low molecular weight body, the details of which will be described later. In such a thermoplastic resin, it is expected that there are advantages such as improved plasticity during molding, improved productivity, and lower energy consumption.

(4) Optional constituent unit (constituent unit (Z))

In the thermoplastic resin, a constituent unit (optional constituent unit (Z)) other than the silane constituent unit, dinaphthalene constituent unit (N), and fluorene constituent unit (F), which can be considered as the main components constituting the main chain, may be contained. It is, for example, any of the constituent units derived from the diol compounds described below.

Examples of the constituent unit (Z) that may be contained in the thermoplastic resin include those derived from a diol compound represented by any of the following formulas ($I^1$) to ($I^6$). These diol compounds may be abbreviated as diol compounds ($I^1$) to ($I^6$), respectively.

The diol compound ($I^1$) is represented by the following formula ($I^1$):

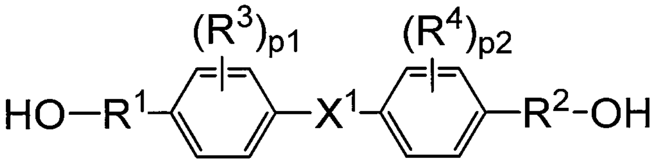

( $I^1$ )

wherein

$R^1$ and $R^2$ independently represent $-(CR^5R^6)_{q1}-$ or $-(-O-(CR^5R^6)_{q2}-)_{q3}-$ (wherein $R^5$ and $R^6$ independently represent H or a $C_{1-6}$ alkyl group, q1 represents an integer of 0 or more and 10 or less, q2 represents an integer of 1 or more and 10 or less, q3 represents an integer of 1 or more and 10 or less, and when q1 or q2 is an integer of 2 or more, a plurality of $R^5$ or $R^6$ may be the same as or different from each other);

$R^3$ and $R^4$ independently represent one or more halogeno groups selected from the group consisting of chloro, bromo,

and iodo, a $C_{1-20}$ aliphatic hydrocarbon group, a $C_{1-20}$ alkoxyl group, a $C_{3-20}$ cycloalkyl group, a $C_{6-20}$ aromatic hydrocarbon group, a $C_{7-20}$ aralkyl group, a $C_{6-20}$ aromatic hydrocarbon oxy group, or a $C_{3-20}$ cycloalkoxyl group; $X^1$ is any of the groups shown below:

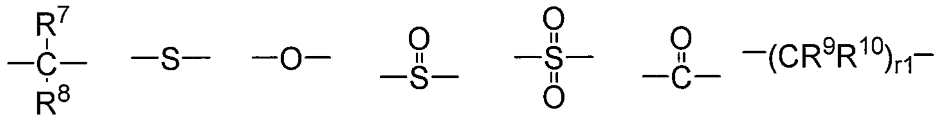

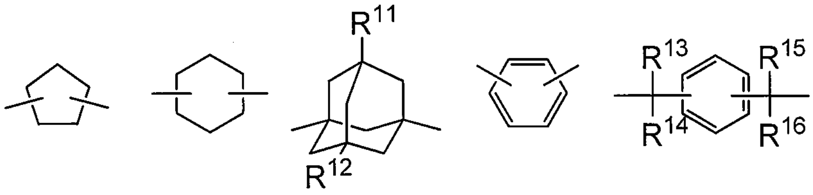

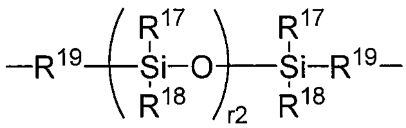

wherein

$R^7$ and $R^8$ independently represent H, one or more halogeno groups selected from the group consisting of chloro, bromo, and iodo, a $C_{1-20}$ aliphatic hydrocarbon group optionally having a substituent $\alpha$, a $C_{1-20}$ alkoxyl group optionally having a substituent $\alpha$, or a $C_{6-20}$ aromatic hydrocarbon group optionally having a substituent $\beta$, or $R^7$ and $R^8$ may be bonded to form a $C_{3-20}$ carbocycle or a 5- to 12-membered heterocycle;
$R^9$ and $R^{10}$ independently represent H or a $C_{1-6}$ alkyl group, and when r1 is an integer of 2 or more, a plurality of $R^9$ or $R^{10}$ may be the same as or different from each other;
$R^{11}$ to $R^{18}$ independently represent one or more halogeno groups selected from the group consisting of chloro, bromo, and iodo, a $C_{1-20}$ aliphatic hydrocarbon group optionally having a substituent $\alpha$, a $C_{1-20}$ alkoxyl group optionally having a substituent $\alpha$, or a $C_{6-12}$ aromatic hydrocarbon group optionally having a substituent $\beta$;
$R^{19}$ represents a $C_{1-9}$ alkylene group optionally having a substituent $\alpha$;
r1 represents an integer of 1 or more and 20 or less; and
r2 represents an integer of 1 or more and 500 or less.

In the above formula ($I^1$),

p1 and p2 independently represent an integer of 0 or more and 4 or less;
the substituent $\alpha$ is one or more substituents selected from a $C_{1-6}$ alkoxyl group, a $C_{1-7}$ acyl group, one or more halogeno groups selected from the group consisting of chloro, bromo, and iodo, an amino group, a nitro group, a cyano group, and a carbamoyl group; and
the substituent $\beta$ is one or more substituents selected from a $C_{1-6}$ alkyl group, a $C_{1-6}$ alkoxyl group, a $C_{1-7}$ acyl group, one or more halogeno groups selected from the group consisting of chloro, bromo, and iodo, an amino group, a nitro group, a cyano group, and a carbamoyl group.

Examples of $-(CR^5R^6)_{q1}-$, which is a choice for $R^1$ and $R^2$ in the above formula ($I^1$), may include an ethylene group ($-CH_2CH_2-$), and examples of $-O-(CR^5R^6)_{q2}-$ may include $-O-CH_2CH_2-$ and $-O-CH(CH_3)CH_2-$. Note that when $R^1$ is $-(-O-(CR^5R^6)_{q2}-)_{q3}-$, $HO-R^1-Ph$ is not $HO-(-O-(CR^5R^6)_{q2}-)_{q3}-Ph$ but $HO-(-(CR^5R^6)_{q2}-O-)_{q3}-Ph$ from the standpoint of stability. q2 is preferably 2 or more.
As the "halogeno groups," chloro, bromo, and iodo can be exemplified, with chloro or bromo being preferable, and chloro being more preferable.
The "$C_{1-20}$ aliphatic hydrocarbon group" refers to a linear or branched monovalent aliphatic hydrocarbon group having 1 or more and 20 or less carbon atoms, and examples thereof may include a $C_{1-20}$ alkyl group, a $C_{2-20}$ alkenyl group, and a $C_{2-20}$ alkynyl group. Examples of the $C_{1-20}$ alkyl group include methyl, ethyl, n-propyl, isopropyl, n-butyl, isobutyl, s-butyl, t-butyl, n-pentyl, n-hexyl, n-octyl, n-decyl, n-pentadecyl, and n-icosyl. It is preferably a $C_{1-10}$ alkyl group or a $C_{1-6}$ alkyl group, more preferably a $C_{1-4}$ alkyl group or a $C_{1-2}$ alkyl group, and even more preferably methyl. Examples of the $C_{2-20}$

alkenyl group include ethenyl (vinyl), 1-propenyl, 2-propenyl (allyl), isopropenyl, 2-butenyl, 3-butenyl, isobutenyl, pentenyl, hexenyl, octenyl, decenyl, pentadecenyl, and icosenyl. It is preferably a $C_{2-10}$ alkenyl group or a $C_{2-6}$ alkenyl group, and more preferably ethenyl (vinyl) or 2-propenyl (allyl). Examples of the $C_{2-20}$ alkynyl group include ethynyl, 1-propynyl, 2-propynyl, 2-butynyl, 3-butynyl, pentynyl, hexynyl, octynyl, decynyl, pentadecynyl, and icosynyl. It is preferably a $C_{2-10}$ alkynyl group or a $C_{2-6}$ alkynyl group, and more preferably a $C_{2-4}$ alkynyl group or a $C_{2-3}$ alkynyl group.

The "$C_{1-20}$ alkoxyl group" refers to a linear or branched monovalent aliphatic hydrocarbon oxy group having 1 or more and 20 or less carbon atoms. Examples thereof include methoxy, ethoxy, n-propoxy, isopropoxy, n-butoxy, isobutoxy, t-butoxy, n-pentoxy, and n-hexoxy, and it is preferably a $C_{1-10}$ alkoxyl group or a $C_{1-6}$ alkoxyl group, more preferably a $C_{1-4}$ alkoxyl group or a $C_{1-2}$ alkoxyl group, and even more preferably methoxy.

The "$C_{3-20}$ cycloalkyl group" refers to a monovalent cyclic saturated aliphatic hydrocarbon group having 3 or more and 20 or less carbon atoms. Examples thereof include cyclopropyl, cyclobutyl, cyclopentyl, cyclohexyl, and adamantyl. It is preferably a $C_{3-10}$ cycloalkyl group.

The "$C_{6-20}$ aromatic hydrocarbon group" refers to a monovalent aromatic hydrocarbon group having 6 or more and 20 or less carbon atoms. Examples thereof include phenyl, indenyl, naphthyl, biphenyl, acenaphthenyl, fluorenyl, phenalenyl, phenanthrenyl, anthracenyl, triphenylenyl, pyrenyl, chrysenyl, naphthacenyl, and perylenyl, and it is preferably a $C_{6-12}$ aromatic hydrocarbon group, and more preferably phenyl.

The "$C_{7-20}$ aralkyl group" refers to an alkyl group having 7 or more and 20 or less carbon atoms, substituted with one aromatic hydrocarbon group. Examples thereof may include benzyl, phenethyl, phenylpropyl, naphthylmethyl, naphthylethyl, and biphenylmethyl, with benzyl being preferable.

The "$C_{6-20}$ aromatic hydrocarbon oxy group" refers to a monovalent aromatic hydrocarbon oxy group having 6 or more and 20 or less carbon atoms. Examples thereof include phenoxy, indenyloxy, naphthyloxy, biphenyloxy, acenaphthenyloxy, fluorenyloxy, phenalenyloxy, phenanthrenyloxy, anthracenyloxy, anthracenyloxy, triphenylenyloxy, pyrenyloxy, chrysenyloxy, naphthacenyloxy, and perylenyloxy, and it is preferably a $C_{6-12}$ aromatic hydrocarbon oxy group, and more preferably phenoxy.

The "$C_{3-20}$ cycloalkoxyl group" refers to a monovalent cyclic saturated aliphatic hydrocarbon oxy group having 3 or more and 20 or less carbon atoms. Examples thereof include cyclopropyloxy, cyclobutyloxy, cyclopentyloxy, cyclohexyloxy, adamantyloxy, and cyclododecanyl. It is preferably a $C_{3-12}$ cycloalkyloxy group.

Examples of the substituent $\alpha$ may include one or more substituents selected from a $C_{1-6}$ alkoxyl group, a $C_{1-7}$ acyl group, one or more halogeno groups selected from the group consisting of chloro, bromo, and iodo, an amino group, a nitro group, a cyano group, and a carbamoyl group.

Examples of the substituent $\beta$ may include one or more substituents selected from a $C_{1-6}$ alkyl group, a $C_{1-6}$ alkoxyl group, a $C_{1-7}$ acyl group, one or more halogeno groups selected from the group consisting of chloro, bromo, and iodo, an amino group, a nitro group, a cyano group, and a carbamoyl group.

Note that when the diol compound contains a substituent, the description of the range of the number of carbon atoms is for the total number of carbon atoms, including the number of carbon atoms in the substituent.

The "amino group" shall include an unsubstituted amino group ($-NH_2$), as well as a mono-$C_{1-6}$ alkylamino group, which is substituted with one $C_{1-6}$ alkyl group, and a di-$C_{1-6}$ alkylamino group, which is substituted with two $C_{1-6}$ alkyl groups. Examples of such an amino group may include: amino ($-NH_2$); a mono-$C_{1-6}$ alkylamino group, such as methylamino, ethylamino, n-propylamino, isopropylamino, n-butylamino, isobutylamino, t-butylamino, n-pentylamino, and n-hexylamino; and a di-$C_{1-6}$ alkylamino group, such as dimethylamino, diethylamino, di(n-propyl)amino, diisopropylamino, di(n-butyl)amino, diisobutylamino, di(n-pentyl)amino, di(n-hexyl)amino, ethylmethylamino, methyl(n-propyl)amino, n-butylmethylamino, ethyl(n-propyl)amino, and n-butylethylamino. It is preferably an unsubstituted amino group.

The "$C_{1-7}$ acyl group" refers to the remaining atomic group of an aliphatic carboxylic acid having 1 or more and 7 or less carbon atoms, excluding OH. Examples thereof include formyl, acetyl, ethylcarbonyl, n-propylcarbonyl, isopropylcarbonyl, n-butylcarbonyl, isobutylcarbonyl, t-butylcarbonyl, n-pentylcarbonyl, and n-hexylcarbonyl, and it is preferably a $C_{1-4}$ acyl group, and more preferably acetyl.

There is no particular restriction on the number of substituents of the substituent $\alpha$, as long as it is substitutable, but for example, it can be 1 or more and 20 or less. Such a number of substituents is preferably 10 or less, more preferably 5 or less or 3 or less, and even more preferably 2 or less or 1.

There is no particular restriction on the number of substituents of the substituent $\beta$, as long as it is substitutable, but for example, it can be 1 or more and 10 or less. Such a number of substituents is preferably 5 or less, more preferably 3 or less, and even more preferably 2 or less or 1.

Examples of the $C_{5-20}$ carbocycle that $R^7$ and $R^8$ are bonded to form may include a $C_{3-20}$ cycloalkyl group optionally having a substituent $\beta$, and a fused ring of a cycloalkyl group and an aromatic hydrocarbon group. Examples of such a fused ring may include acenaphthenyl and fluorenyl.

Examples of the 5- to 12-membered heterocycle that $R^7$ and $R^8$ are bonded to form may include oxiranyl, aziridinyl, tetrahydrofuranyl, tetrahydrothiophenyl, pyrrolidinyl, oxathiolanyl, piperidinyl, and 1(3H)-isobenzofuranonyl.

Specific examples of the diol compound ($I^1$) include the following compounds.

Examples thereof may include bis(4-hydroxyphenyl)methane, bis(2-hydroxyphenyl)methane, 2,4'-dihydroxydiphenylmethane, bis(4-hydroxyphenyl) ether, bis(4-hydroxyphenyl)sulfone, 2,4'-dihydroxydiphenylsulfone, bis(2-hydroxyphenyl)sulfone, bis(4-hydroxy-3-methylphenyl)sulfone, bis(4-hydroxyphenyl) sulfoxide, bis(4-hydroxyphenyl) sulfide, bis(4-hydroxyphenyl) ketone, 1,1-bis(4-hydroxyphenyl)ethane, 1,1-bis(4-hydroxyphenyl)-1-phenylethane, bis(4-hydroxyphenyl)diphenylmethane, 2,2-bis(4-hydroxyphenyl)propane, 2,2-bis(4-hydroxy-3-methylphenyl)propane, 1,1-bis(4-hydroxy-3-methylphenyl)ethane, bis(4-hydroxy-3-methylphenyl)methane, 2,2-bis(4-hydroxy-3-t-butylphenyl)propane, 2,2-bis(4-hydroxyphenyl)butane, 1,1-bis(4-hydroxyphenyl)cyclohexane, 1,1-bis(4-hydroxy-3-methylphenyl)cyclohexane, 1,1-bis(4-hydroxyphenyl)cycloundecane, 1,1-bis(4-hydroxyphenyl)cyclododecane, 2,2-bis(4-hydroxy-3-allylphenyl)propane, 3,3,5-trimethyl-1,1-bis(4-hydroxyphenyl)cyclohexane, 9,9-bis(4-hydroxy-3-ethylphenyl)fluorene, 9,9-bis(4-hydroxy-3-methylphenyl)fluorene, 9,9-bis(4-hydroxyphenyl)fluorene, α,ω-bis[3-(o-hydroxyphenyl)propyl]polydimethyldiphenyl random copolymerized siloxane, α,ω-bis[3-(o-hydroxyphenyl)propyl]polydimethylsiloxane, 4,4'-[1,4-phenylenebis(1-methylethylidene)]bisphenol, 4,4'-[1,3-phenylenebis(1-methylethylidene)]bisphenol, 2,2-bis(4-hydroxyphenyl)butane, 1,1-bis(4-hydroxyphenyl)-2-ethylhexane, 1,1-bis(4-hydroxyphenyl)-2-methylpropane, 2,2-bis(4-hydroxyphenyl)-4-methylpentane, 1,1-bis(4-hydroxyphenyl)decane, 1,3-bis(4-hydroxyphenyl)-5,7-dimethyladamantane, 9,9-bis[4-(2-hydroxyethoxy)phenyl]fluorene, 9,9-bis[4-(2-hydroxyethoxy)-3-methylphenyl]fluorene, 9,9-bis[4-(2-hydroxyethoxy)-3-t-butylphenyl]fluorene, 9,9-bis[4-(2-hydroxyethoxy)-3-isopropylphenyl]fluorene, 9,9-bis[4-(2-hydroxyethoxy)-3-cyclohexylphenyl]fluorene, 9,9-bis[4-(2-hydroxyethoxy)-3-phenylphenyl]fluorene, 4-(9-(4-hydroxyethoxy) phenyl)-9H-fluoren-9-yl)phenol, 2,2-bis(4-(2-hydroxyethoxy)phenyl)propane, 4,4-bis(2-hydroxyethoxy)biphenyl, 2,2'(9H-fluorene-9,9'-diyl)bis(ethan-1-ol), 9H-fluorene-9,9-diyl)dimethanol, 2,2'-(1,4-phenylene)bis(ethan-1-ol), 2,2'-(1,4-phenylene)bis(methan-1-ol), 2,2'-(1,4phenylenebis(oxy))bis(ethan-1-ol), 1,1-bis(4-hydroxyphenyl)cyclododecane, 1,1-bis(4-hydroxy-3-methylphenyl)cyclododecane, 1,1-bis(4-hydroxy-3-phenylphenyl)cyclododecane, 1,1-bis(4-hydroxy-3-t-butylphenyl)cyclododecane, 1,1-bis(4-hydroxy-3-sec-butylphenyl)cyclododecane, 1,1-bis(4-hydroxy-3-allylphenyl)cyclododecane, 1,1-bis(4-hydroxy-3,5-dimethylphenyl)cyclododecane, 1,1-bis(4-hydroxy-3-fluorophenyl)cyclododecane, 1,1-bis(4-hydroxy-3-chlorophenyl)cyclododecane, 1,1-bis(4-hydroxy-3-bromophenyl)cyclododecane, 7-ethyl-1,1-bis(4-hydroxyphenyl)cyclododecane, and 5,6-dimethyl-1,1-bis(4-hydroxyphenyl)cyclododecane.

Among these, in particular, bis(4-hydroxyphenyl)methane, bis(2-hydroxyphenyl)methane, 2,4'-dihydroxydiphenylmethane, bis(4-hydroxyphenyl) ether, 2,2-bis(4-hydroxyphenyl)propane, 2,2-bis(4-hydroxy-3-methylphenyl)propane, 1,1-bis(4-hydroxyphenyl)cyclohexane, 9,9-bis[4-(2-hydroxyethoxy)phenyl]fluorene, 9,9-bis[4-(2-hydroxyethoxy)-3-phenylphenyl]fluorene, 1,1-bis(4-hydroxyphenyl)cyclododecane, and 1,1-bis(4-hydroxy-3-methylphenyl)cyclododecane are preferable. Furthermore, representative diol compounds $(I^1)$ are shown below:

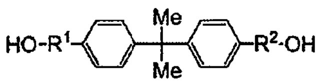 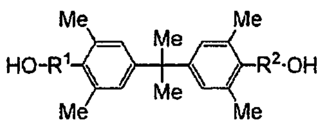

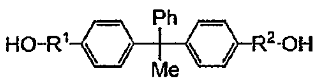 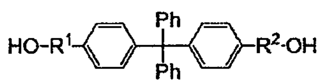

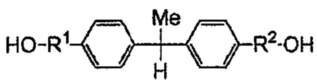 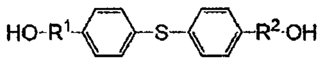

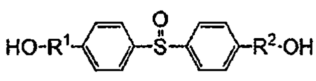 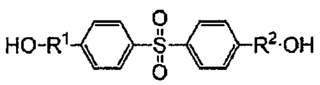

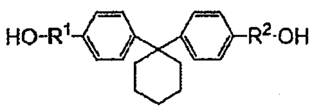 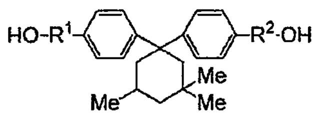

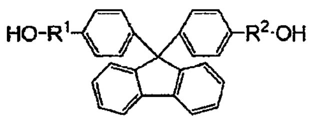
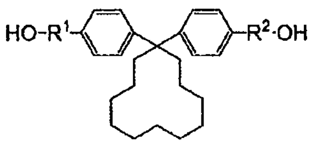
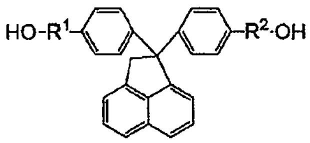
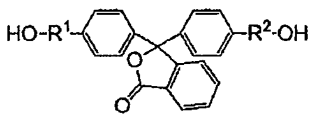
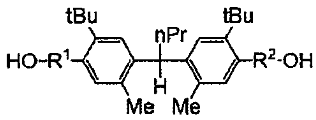

wherein $R^1$ and $R^2$ represent the same definition as described above.

However, in some cases, bisphenol A, bisphenol AP, bisphenol B, bisphenol BP, bisphenol E, bisphenol F, bisphenol TMC, and bisphenol Z may be excluded from the diol compound ($I^1$).

The diol compound ($I^2$) is represented by the following formula ($I^2$):

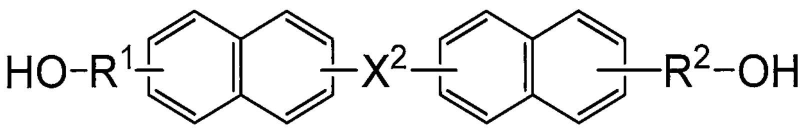

$(I^2)$

wherein $R^1$ and $R^2$ represent the same definition as described above, and $X^2$ represents the same definition as $X^1$.

Specific examples of the diol compound ($I^2$) include 9,9-bis[6-(1-hydroxymethoxy)naphthalen-2-yl]fluorene, 9,9-bis[6-(2-hydroxyethoxy)naphthalen-2-yl]fluorene, 9,9-bis[6-(3-hydroxypropoxy)naphthalen-2-yl]fluorene, and 9,9-bis [6-(4-hydroxybutoxy)naphthalen-2-yl]fluorene. Among the above, 9,9-bis[6-(2-hydroxyethoxy)naphthalen-2-yl]fluorene is preferable.

The diol compound ($I^3$) is represented by the following formula ($I^3$):

$HO\text{-}R^1\text{-}X^3\text{-}R^2\text{-}OH$ $(I^3)$

wherein $R^1$ and $R^2$ represent the same definition as described above, and $X^3$ represents a $C_{15-32}$ divalent aromatic hydrocarbon group.

Examples of the $C_{15-32}$ divalent aromatic hydrocarbon group may include: a $C_{15-32}$ divalent fused polycyclic aromatic hydrocarbon group, such as fluoranthenylene, acephenanthrylenylene, aceanthrylenylene, triphenylene, pyrenylene, chrysenylene, naphthacenylene, pleiadenylene, pycenylene, perylenylene, biphenylene, pentaphenylene, pentacenylene, tetraphenylenylene, hexaphenylene, hexacenylene, rubicenylene, coronenylene, trinaphthylenylene, heptaphenylene, heptacenylene, pyranthrenylene, and ovalenylene; and terphenylene and quaterphenylene.

There is no particular restriction on the number of $R^3$ groups on $X^3$, as long as they are substitutable, but for example, it can be 1 or more and 10 or less, with 8 or less or 5 or less being preferable, and 1 or 2 being more preferable.

Specific examples of the diol compound ($I^3$) include a binaphthalene diol compound represented by the following formula:

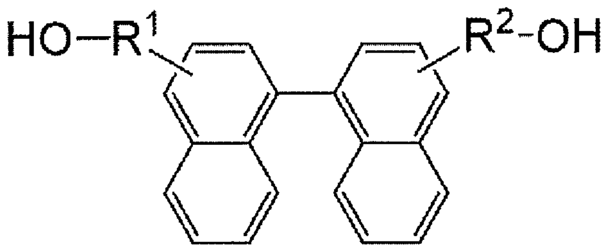

wherein $R^1$ and $R^2$ represent the same definition as described above.

Examples of such a binaphthalene diol compound include 2,2'-bis(1-hydroxymethoxy)-1,1'-binaphthalene, 2,2'-bis(2-hydroxyethoxy)-1,1'-binaphthalene, 2,2'-bis(3-hydroxypropyloxy)-1,1'-binaphthalene, and 2,2'-bis(4-hydroxybutoxy)-1,1'-binaphthalene. Among the above, 2,2'-bis(2-hydroxyethoxy)-1,1'-binaphthalene is preferable.

The diol compound ($I^4$) is represented by the following formula ($I^4$):

$$HO\text{-}R^{20}\text{-}X^{4}\text{-}R^{21}\text{-}OH \qquad (I^4)$$

wherein

$R^{20}$ and $R^{21}$ independently represent $-(CR^5R^6)_{m1}-$ or $-(-O-(CR^5R^6)_{m2}-)_{m3}-$(wherein $R^5$ and $R^6$ represent the same definition as described above, $m_1$ represents an integer of 1 or more and 10 or less, $m_2$ represents an integer of 1 or more and 10 or less, $m_3$ represents an integer of 1 or more and 10 or less, and when $m_1$ or $m_2$ is an integer of 2 or more, a plurality of $R^5$ or $R^6$ may be the same as or different from each other); and

$X^4$ represents a divalent group containing one or more hydrocarbon rings or heterocycles.

$m_2$ is preferably 2 or more.

Examples of $-(CR^5R^6)_{m1}-$, which is a choice for $R^{20}$ and $R^{21}$ in the above formula ($I^4$), may include an ethylene group ($-CH_2CH_2-$), and examples of $-O-(CR^5R^6)_{m2}-$ may include $-O-CH_2CH_2-$ and $-O-CH(CH_3)CH_2-$. Note that when $R^1$ is $-(-O-(CR^5R^6)_{m2}-)_{m3}-$, $HO-R^1-X^3-$ is not $HO-(-O-(CR^5R^6)_{m2}-)_{m3}-X^3-$ but $HO-(-(CR^5R^6)_{m2}-O-)_{m3}-X^3-$ from the standpoint of stability.

Examples of the divalent group containing one or more hydrocarbon rings or heterocycles may include a divalent $C_{6-32}$ aromatic hydrocarbon group optionally having a substituent β, a divalent $C_{3-20}$ cycloalkyl group optionally having a substituent β, and a divalent group having one or more each of a divalent $C_{6-32}$ aromatic hydrocarbon group optionally having a substituent β and a divalent $C_{3-20}$ cycloalkyl group optionally having a substituent β.

The divalent $C_{6-32}$ aromatic hydrocarbon group may contain a heteroatom selected from an oxygen atom, a sulfur atom, and a nitrogen atom, as long as it exhibits aromaticity as a whole. There is no particular restriction on the divalent $C_{6-32}$ aromatic hydrocarbon group, but examples thereof may include the following.

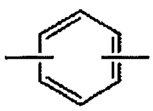
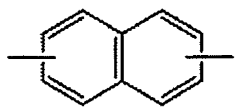
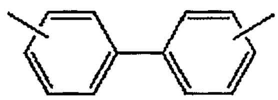
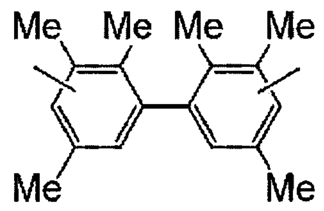

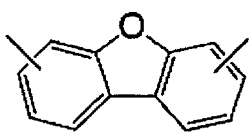
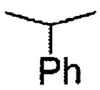
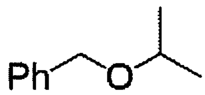
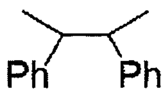
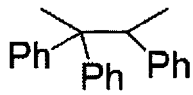

The divalent $C_{3-20}$ cycloalkyl group may also contain a heteroatom selected from an oxygen atom, a sulfur atom, and a nitrogen atom. There is no particular restriction on the divalent $C_{3-14}$ cycloalkyl group, but examples thereof may include the following.

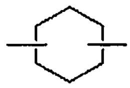
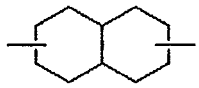
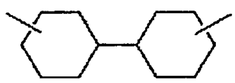
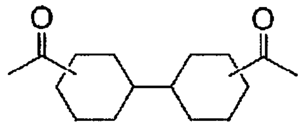

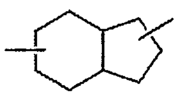
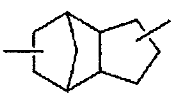
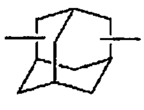
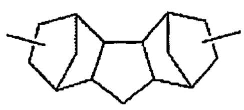
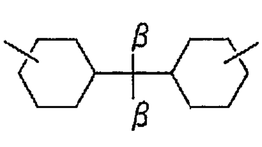

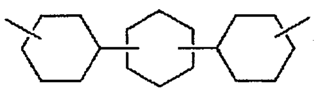
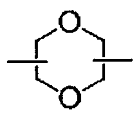
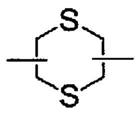
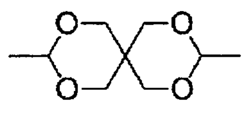
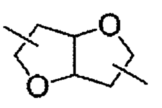

There is no particular restriction on the divalent group having one or more each of a divalent $C_{6-32}$ aromatic hydrocarbon group optionally having a substituent β and a divalent $C_{3-20}$ cycloalkyl group optionally having a substituent β,

but examples thereof may include the following.

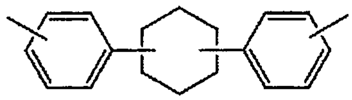
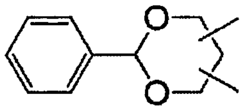
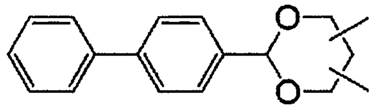

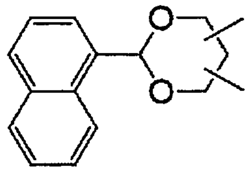

The diol compound ($I^5$) is represented by the following formula ($I^5$):

$$HO\text{-}R^1\text{-}X^5\text{-}R^2\text{-}OH \qquad (I^5)$$

wherein $R^1$ and $R^2$ represent the same definition as described above, and $X^5$ represents a divalent saturated heterocyclic group.

There is no particular restriction on the divalent saturated heterocyclic group, but examples thereof may include the following.

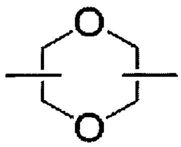
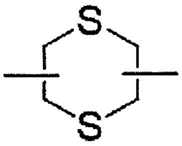
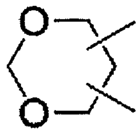
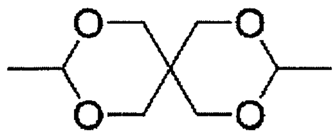
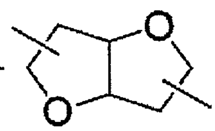

The diol compound ($I^6$) is represented by the following formula ($I^6$):

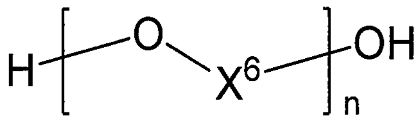
( $I^6$ )

wherein $X^6$ represents a $C_{1-10}$ alkylene group; and
n represents an integer of 13 or more and 50 or less.

The $C_{1-10}$ alkylene group refers to a linear or branched divalent saturated aliphatic hydrocarbon group having 1 or more and 10 or less carbon atoms. Examples thereof may include $-CH_2-$, $-CH_2CH_2-$, $-CH_2CH_2CH_2-$, $-CH_2CH(CH_3)-$, $-CH(CH_3)CH_2-$, and $-CH_2CH_2CH_2CH_2-$. $X^6$ in the diol compound ($I^6$) may be the same as or different from each other, and when there is a plurality of $X^5$, the arrangement of $-O-X^6-$ may be in a random or block manner. The $C_{1-10}$ alkylene group is preferably a $C_{2-10}$ alkylene group.

Only one type of diol compound may be used alone, or two or more types thereof may be used in combination. For example, the use of two or more types of diol compounds in combination can produce a copolymerized polycarbonate well. However, from the viewpoint of production efficiency and other factors, it is preferable to use only one type of diol compound alone. When two or more types of diol compounds are used, the number of diol compounds is preferably 5 or less, more preferably 3 or less, and even more preferably 2. By using two or more types of diol compounds and copolymerizing them by the present invention method, the physical property range of the resulting polycarbonate is broadened and the physical properties can be easily adjusted.

There is no particular limitation on the amounts of the $C_{1-4}$ halogenated hydrocarbon and the diol compound used, as long as the reaction proceeds and the desired product is obtained, and for example, the above reaction proceeds even when using one time the moles of diol compound relative to the number of moles of $C_{1-4}$ halogenated hydrocarbon. Note that, from the viewpoint of reaction efficiency, reaction time, and other factors, the molar ratio of the diol compound to the $C_{1-4}$ halogenated hydrocarbon ([diol compound]/[$C_{1-4}$ halogenated hydrocarbon]) is preferably set to 0.001 or more and 1 or less. The above molar ratio is more preferably 0.01 or more, and even more preferably 0.1 or more, and also, it is more preferably 0.8 or less, and even more preferably 0.5 or less. If the above molar ratio is too large, the amount of nucleophilic functional group-containing compound is relatively increased, resulting in an increase in unreacted nucleophilic functional group-containing compound, whereas if the above molar ratio is too small, the amount of unreacted $C_{1-4}$

halogenated hydrocarbon is increased, which may cause the release of carbonyl halide outside the reaction system. Also, if the $C_{1-4}$ halogenated hydrocarbon is liquid at normal temperature and normal pressure and can also be used as a solvent, the proportion of the diol compound to the $C_{1-4}$ halogenated hydrocarbon may be set to 1 mg/mL or more and 500 mg/mL or less.

Among the above-mentioned optional constituent units (Z), constituent units derived from diols having an aromatic ring, which tend to increase the value of refractive index of the thermoplastic resin, are preferable. Also, from the viewpoint of monomer reactivity in the polymerization reaction, constituent units derived from diols having an aliphatic hydroxyl group bonded to a non-phenolic alkylene group or the like (such as $-CH_2-OH$) are preferable. In view of the above, it is preferable to provide a constituent unit (Z) derived from any of the diol compounds ($I^1$) to ($I^3$) represented by the above general formulas ($I^1$) to ($I^3$), containing an aromatic ring and an aliphatic hydroxyl group.

The thermoplastic resin may be a random copolymer or block copolymer consisting of the silane constituent unit, the dinaphthalene constituent unit (N), and the fluorene constituent unit (F). Alternatively, the thermoplastic resin may be either a random copolymer or block copolymer containing the silane constituent unit, the dinaphthalene constituent unit (N), the fluorene constituent unit (F), and the constituent unit (Z).

In addition, from the viewpoint of the properties of the thermoplastic resin, simplification of the production process, and other factors, it is preferable that the thermoplastic resin be a random copolymer. It is also preferable that the bonding of dinaphthalene constituent units (N) to each other via the silane constituent unit and the bonding of fluorene constituent units (F) to each other via the silane constituent unit be as little as possible, and that most dinaphthalene constituent units (N) and fluorene constituent units (F) be bonded alternately via the silane constituent unit.

In the thermoplastic resin, it is preferable that each of the above-mentioned constituent units, that is, the silane constituent unit, the dinaphthalene constituent unit (N), the fluorene constituent unit (F), and the optional constituent unit (Z), be bonded via an ether bond, and it is more preferable that substantially all of the constituent units in the thermoplastic resin be bonded via an ether bond.

However, in the thermoplastic resin, a carbonate bond and/or an ester bond may be present, and the thermoplastic resin may be a polycarbonate resin, a polyester resin, or a polyester carbonate resin.

<I-2. Ratio of constituent units>

In the thermoplastic resin, it is preferable that the content of the fluorene constituent unit (F) be 30 to 95% by mol based on the total number of moles of the fluorene constituent unit (F) and the dinaphthalene constituent unit (N). The content of the fluorene constituent unit (F) in the total number of moles of the fluorene constituent unit (F) and the dinaphthalene constituent unit (N) is more preferably 40 to 92% by mol, still more preferably 50 to 90% by mol, and particularly preferably 50 to 80% by mol.

In the thermoplastic resin, it is preferable that the content of the dinaphthalene constituent unit (N) be 5 to 70% by mol based on the total number of moles of the fluorene constituent unit (F) and the dinaphthalene constituent unit (N). The content of the dinaphthalene constituent unit (N) in the total number of moles of the fluorene constituent unit (F) and the dinaphthalene constituent unit (N) is more preferably 8 to 60% by mol, still more preferably 10 to 50% by mol, and particularly preferably 20 to 50% by mol.

In the thermoplastic resin, the silane constituent unit (S) is bonded to a terminal of the fluorene constituent unit (F) or the dinaphthalene constituent unit (N), and due to the following reason, it is contained in a number of moles approximately equal to the total number of moles of the fluorene constituent unit (F) and the dinaphthalene constituent unit (N). The silane constituent unit (S) is formed as follows. In the polymerization reaction between the above-mentioned silane compound and a hydroxyl group in the dinaphthalene-containing dihydroxy compound or fluorene ring-containing dihydroxy compound, an alkoxy group or monoaryloxy group in the silane compound is eliminated. Therefore, in the thermoplastic resin, the number of moles of the silane constituent unit (S) is normally equal to the total number of moles of the fluorene constituent unit (F) and the dinaphthalene constituent unit (N). However, when the silane constituent unit (S) is placed at the both terminals of the above-mentioned constituent unit (F) or (N) derived from the diol, the number of moles of the silane constituent unit (S) may be slightly in excess of the total number of moles of the constituent units (F) and (N), and for example, the number of moles of the silane constituent unit (S) may be about 1.01 times the total number of moles of the constituent units (F) and (N).

As described above, the number of moles of the silane constituent unit (S) in the thermoplastic resin is, for example, 1.00 times to 1.05 times, preferably 1.00 times to 1.03 times, and more preferably 1.00 times to 1.01 times, the total number of moles of the fluorene constituent unit (F) and the dinaphthalene constituent unit (N).

In the thermoplastic resin, the proportion that the optional constituent unit (Z) accounts for in all constituent units is preferably 30% by mol or less, more preferably 20% by mol or less, still more preferably 10% by mol or less, and particularly preferably 5% by mol or less, and the optional constituent unit (Z) is not necessarily contained.

Also, in the thermoplastic resin, the total of the silane constituent unit, the fluorene constituent unit (F), and the dinaphthalene constituent unit (N) in all constituent units is preferably 70% by mol or more, more preferably 80% by mol or

more, still more preferably 90% by mol or more, and particularly preferably 95% by mol or more. Moreover, the thermoplastic resin may be constituted only by the silane constituent unit, the fluorene constituent unit (F), and the dinaphthalene constituent unit (N).

<I-2. Properties of thermoplastic resin>

The weight average molecular weight of the thermoplastic resin is, for example, 5,000 to 100,000, preferably 5,000 to 50,000 or 5,000 to 45,000, and more preferably 5,000 to 40,000, 6,000 to 45,000, 6,000 to 40,000, or 6,000 to 30,000. The weight average molecular weight of the thermoplastic resin is still more preferably 10,000 to 35,000, 10,000 to 30,000, or 10,000 to 25,000, more preferably 12,000 to 22,000, and particularly preferably 15,000 to 20,000.

In the thermoplastic resin, the glass transition temperature (Tg) in accordance with JIS K 7121 is, for example, 110 to 150°C or 104 to 150°C, preferably 109 to 150°C or 110 to 150°C. Moreover, the range of Tg of the thermoplastic resin is preferably 112 to 140°C, more preferably 115 to 135°C, and still more preferably 120 to 132°C.

In the thermoplastic resin, the refractive index (nD) is preferably 1.670 to 1.750, more preferably 1.672 to 1.730, and still more preferably 1.675 to 1.705. Normally, the value of the refractive index (nD) of thermoplastic resins that may be used in optical applications is preferably high, and therefore, the lower limit is important. The thermoplastic resin in one form of the present invention has a refractive index (nD) value of 1.680 or more. The refractive index (nD) value of the thermoplastic resin is preferably 1.680 or more, more preferably 1.685 or more, and still more preferably 1.690 or more.

While the upper limit value of the refractive index (nD) of the thermoplastic resin is not particularly important, the thermoplastic resin in one form of the present invention has a refractive index (nD) value of 1.702 or less.

In the thermoplastic resin, the Abbe number (ν) of the thermoplastic resin is preferably 15.0 to 24.0, more preferably 15.0 to 23.0, 15.0 to 22.0, or 15.0 to 21.0, still more preferably 15.5 to 20.0, and more preferably 16.0 to 19.7. Thermoplastic resins, especially thermoplastic resins used in optical applications, preferably have a high refractive index, and in thermoplastic resins with a high refractive index, there is normally a tendency for the value of the Abbe number (ν) to be small. However, thermoplastic resins for optical use with a high Abbe number (ν) value can also be useful. The thermoplastic resin in one form of the present invention has an Abbe number (ν) of 15.4 or more. The Abbe number (ν) of the thermoplastic resin is preferably 16.0 or more, more preferably 16.5 or more, and still more preferably 17.0 or more.

In the thermoplastic resin, it is preferable that the YI value, as measured in accordance with JIS K 7105, be 15.0 or less. The range of YI value of the thermoplastic resin is more preferably 12.0 or less, still more preferably 10.0 or less, and particularly preferably 8.0 or less.

In the thermoplastic resin, the proportion of the total weight of silicon atoms (total Si content) based on the entire weight of the thermoplastic resin is, for example, 0.4 to 10.0% by mass, preferably 1.0 to 10.0% by mass, more preferably 1.2 to 8.0% by mass, still more preferably 1.5 to 7.0% by mass, and particularly preferably 2.0 to 6.5% by mass, such as 2.0 to 4.0% by mass.

In the polymer chain of the thermoplastic resin, the proportion of carbonate-derived Ph terminal groups, that is, -OC(O)O-Ph terminal groups, is preferably 0.1 to 20 μeq/g, more preferably 0.5 to 18 μeq/g, still more preferably 1.0 to 16 μeq/g, and particularly preferably 1.5 to 12 μeq/g.

The proportion of carbonate-derived Ph terminal groups, based on the number of all terminal groups in the polymer chain of the thermoplastic resin, is preferably 1 to 20% by mol, more preferably 2 to 18% by mol, still more preferably 3 to 15% by mol, and particularly preferably 4 to 12% by mol.

In the polymer chain of the thermoplastic resin, the proportion of silyl ether-derived Ph terminal groups, that is, $-OSiRs_1Rs_2-OPh$ terminal groups ($Rs_1$ and $Rs_2$ are as defined elsewhere), is preferably 5 to 200 μeq/g, more preferably 10 to 150 μeq/g, still more preferably, 15 to 120 μeq/g, and particularly preferably 20 to 100 μeq/g.

The proportion of silyl ether-derived Ph terminal groups, based on the number of all terminal groups in the polymer chain of the thermoplastic resin, is preferably 30 to 99% by mol, more preferably 40 to 95% by mol, still more preferably 50 to 90% by mol, and particularly preferably 60 to 85% by mol.

Also, in the polymer chain of the thermoplastic resin, the proportion of alkoxy terminal groups, such as silyl ether-derived OMe terminal groups, for example, $- OSiRs_1Rs_2-OMe$ terminal groups ($Rs_1$ and $Rs_2$ are as defined elsewhere), is preferably 5 to 300 μeq/g, more preferably 20 to 250 μeq/g, still more preferably 40 to 200 μeq/g, and particularly preferably 60 to 150 μeq/g.

The proportion of alkoxy terminal groups, such as silyl ether-derived Me terminal groups, based on the number of all terminal groups in the polymer chain of the thermoplastic resin, is preferably 10 to 99% by mol, more preferably 20 to 90% by mol, still more preferably 30 to 80% by mol, and particularly preferably 40 to 70% by mol.

In the thermoplastic resin polymer, impurities may be contained to some extent. For example, in the thermoplastic resin polymer, the respective contents of impurities, such as those derived from raw materials including formic acid and organophosphorous compounds, based on its entire weight, may be, for example, about 5 ppm or more and 100 ppm by weight or less, 10 ppm or more and 70 ppm by weight or less, or 20 ppm or more and 50 ppm by weight or less.

Also, in the thermoplastic resin, a slight amount of catalyst used in the polymerization reaction for production may

remain. For example, with respect to 1 mole of all dihydroxy compounds used in production of the thermoplastic resin polymer, the residual catalyst may be contained in, for example, about 5 μmol or more and 100 μmol or less, 15 mol or more and 80 μmol or less, 25 mol or more and 60 μmol or less, or 30 mol or more and 50 μmol or less, in terms of the metal equivalent.

[II. Composition (thermoplastic resin composition)]

A thermoplastic resin composition of the present invention preferably contains as the main component the above-mentioned thermoplastic resin, which is a polysilyl ether resin. In addition to the thermoplastic resin, the thermoplastic resin composition of the present invention may contain the components described below.

<II-1. Low molecular weight compound (cyclic body)>

In the thermoplastic resin composition, a compound or oligomer with a weight average molecular weight of 1000 or less may be contained. It is, for example, a low molecular weight cyclic body represented by the following general formula (T). The cyclic body represented by the following general formula (T) is thought to be mainly derived from the above-mentioned component B.

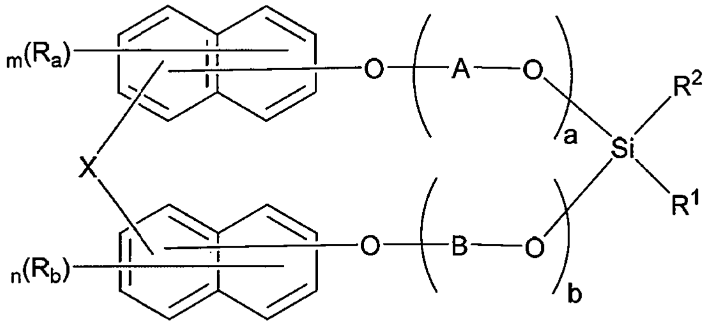

(T)

(In general formula (T),

$R^1$ and $R^2$ each independently represent an alkyl group having 1 to 20 carbon atoms and optionally having a substituent or an aryl group having 6 to 30 carbon atoms and optionally having a substituent.

When $R^1$ and $R^2$ are each an alkyl group optionally having a substituent, the number of carbon atoms in total is preferably 1 to 14 or 1 to 10, the number of carbon atoms in total is more preferably 1 to 6, and the number of carbon atoms in total is particularly preferably 1 or 2.

Also, when $R^1$ and $R^2$ are each an aryl group optionally having a substituent, the number of carbon atoms in total is preferably 6 to 20, the number of carbon atoms in total is more preferably 6 to 12, and the number of carbon atoms in total is particularly preferably 6 to 8.

Preferred specific examples of $R^1$ and $R^2$ include a methyl group, an ethyl group, a propyl group, a phenyl group, and a benzyl group, and more preferred examples thereof include a methyl group and a phenyl group.

In general formula (T), $R_a$ and $R_b$ are each independently selected from the group consisting of a hydrogen atom, a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, an aryl group having 6 to 20 carbon atoms and optionally having a substituent, a heteroaryl group having 6 to 20 carbon atoms and optionally having a substituent, which contains one or more heterocycle atoms selected from O, N, and S, an aryloxy group having 6 to 20 carbon atoms and optionally having a substituent, and $-C \equiv C-R_h$.

Ra and Rb are preferably a hydrogen atom, an aryl group having 6 to 20 carbon atoms and optionally having a substituent, or a heteroaryl group having 6 to 20 carbon atoms and optionally having a substituent, which contains one or more heterocycle atoms selected from O, N, and S, more preferably a hydrogen atom or an aryl group having 6 to 20 carbon atoms and optionally having a substituent, and still more preferably a hydrogen atom or an aryl group having 6 to 12 carbon atoms and optionally having a substituent.

In general formula (T), X represents a single bond or a fluorene group optionally having a substituent. X is preferably a single bond or a fluorene group having 12 to 20 carbon atoms in total and optionally having a substituent.

In general formula (T), A and B are each independently an alkylene group having 1 to 5 carbon atoms and optionally having a substituent, and preferably an alkylene group having 2 or 3 carbon atoms.

In general formula (T), m and n are each independently an integer of 0 to 6, preferably an integer of 0 to 3, and

more preferably 0 or 1.

In general formula (T), a and b are each independently an integer of 0 to 10, preferably an integer of 1 to 3, and more preferably 1 or 2.

Examples of the substituent in general formula (T) include a hydroxyl group, a halogen, an amino group, a vinyl group, a carboxyl group, a cyano group, a (meth)acryloxy group, a glycidyloxy group, and a mercapto group. When general formula (T) contains a substituent, the range of the above-mentioned number of carbon atoms is for the total number of carbon atoms, including the number of carbon atoms in the substituent.

Specific examples of the low molecular weight compound represented by general formula (T) include those represented by the following formulas (T-1) to (T-4).

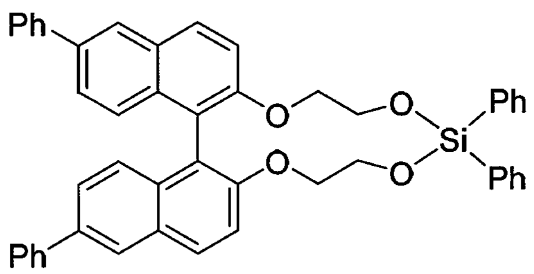

(T-1)

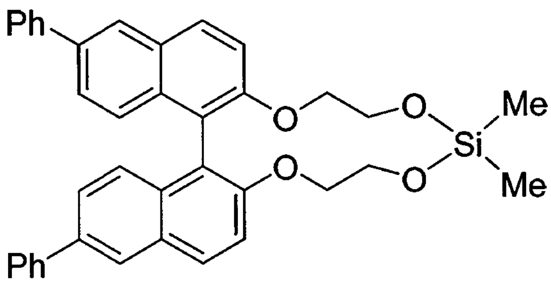

(T-2)

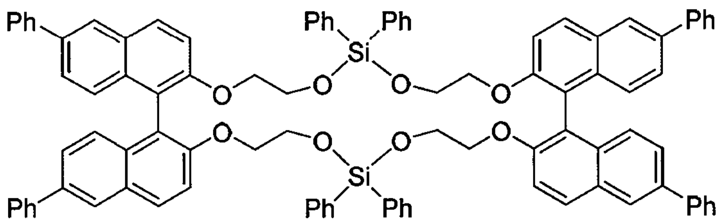

(T-3)

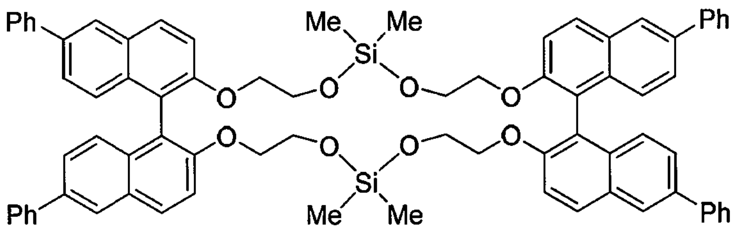

(T-4)

The above-mentioned low molecular weight cyclic body, which may be contained in the thermoplastic resin composition of the present invention, can arise as a by-product due to the polymerization reaction for production of the polyether resin, and its low molecular weight makes the flowability of the composition good and improves the moldability of the thermoplastic resin. Furthermore, since the above-mentioned cyclic body is a low molecular weight body with a molecular structure similar to that of a plasticizer, it is thought that a thermoplastic resin or the like containing the above-mentioned cyclic body is highly miscible with other resins even without the addition of a plasticizer, and problems caused by bleeding out of the plasticizer, which is no longer required to be added, can be reliably prevented. The above-mentioned cyclic body is thought to be mainly derived from the above-mentioned component B, and in a thermoplastic resin produced using only the component A, the above-mentioned cyclic body is not contained, and the effect such as improvement in moldability is thought to be unobtainable.

While it is thought to be better to contain an appropriate amount of a component with high plasticity to improve

moldability, too much of it may contaminate the metal mold during processing of the thermoplastic resin composition.

From the above, in the thermoplastic resin composition, the total content of the cyclic body represented by the above formula (T) is, based on the entire weight of the thermoplastic resin composition, preferably 15% by weight or less or 13% by weight or less, more preferably 10% by weight or less or 8.0% by weight or less, and still more preferably 6.0% by weight or less or 4.0% by weight or less. Also, the total content of the cyclic body represented by the above formula (T) contained in the thermoplastic resin composition is, based on the entire weight of the thermoplastic resin composition, preferably 0.1% by weight or more and 15% by weight or less, more preferably 2.0% by weight or more and 13% by weight or less, still more preferably 3.0% by weight or more and 11% by weight or less, and particularly preferably 4.0% by weight or more or more than 4.0% by weight (higher than 4.0% by weight), and 11% by weight or less.

When the content of these cyclic bodies is in the above-mentioned range, there is no problem with the properties of the thermoplastic resin composition, especially when used in optical applications. Note that the thermoplastic resin composition of the present invention may be free of the above-mentioned cyclic body.

<II-2. Resin other than polyether resin>

The thermoplastic resin composition of the present invention may also contain a thermoplastic resin that does not correspond to the above-mentioned polyether resin, for example, a polycarbonate resin. The type of the polycarbonate resin is not particularly limited as long as it includes a -[O-R-OCO]- unit including a carbonate ester bond in the molecular main chain (R is an aliphatic group, aromatic group, or one including both aliphatic and aromatic groups, and also has a linear or branched structure). Also, the thermoplastic resin composition, the polycarbonate resin may include a polyester carbonate resin and a polyester resin. Then, as for the polyester carbonate resin and the polyester resin as well, there is no particular limitation as long as it includes a -[O-R-OC]- unit including a carbonate ester bond in the molecular main chain (R is as mentioned above).

The weight average molecular weight of the polycarbonate resin is preferably 10,000 to 100,000, more preferably 13,000 to 80,000, and still more preferably 15,000 to 60,000.

The composition of the present invention may contain a resin other than the polyether resin, preferably a thermoplastic resin. The type of such a thermoplastic resin as a sub-component is not particularly limited, and in addition to the polycarbonate resin and polyester carbonate resin, examples thereof include various resins such as acrylic resin including polymethyl methacrylate (PMMA), polyethylene terephthalate (PET), triacetyl cellulose (TAC), polyethylene naphthalate (PEN), polyimide (PI), cycloolefin copolymer (COC), norbornene-containing resin, polyethersulfone, cellophane, and aromatic polyamide.

In the composition, the proportion of the total weight of silicon atoms (total Si content) based on the entire weight of the composition is preferably 0.1 to 20% by mass, more preferably 0.2 to 15% by mass, and particularly preferably 0.3 to 10% by mass.

By using a thermoplastic resin with a high Si content, a composition with excellent characteristics can be produced. By mixing a thermoplastic resin or the like with a Si content of, for example, 0.1% by mass or more with a resin that is substantially free of silyl ether constituent units, preferably polycarbonate resin, it is possible to achieve both excellent impact resistance and flowability in the resulting composition.

Note that, in the composition containing the thermoplastic resin, a phenolic compound that may be generated as a by-product of the polymerization reaction, as well as the silane compound, carbonate compound, and diol compound that remain without undergoing the reaction, may be contained. The phenolic compound and diphenyl carbonate, which are impurities, may cause a decrease in strength when made into a molded body, and may also cause odor generation. Therefore, it is preferable for their contents to be kept as low as possible. For this reason, the contents of the phenolic compound, silane compound, carbonate compound, and diol compound may be reduced to the extent that they are not detected, but from the viewpoint of productivity, they may be contained in the composition to the extent that they do not impair the effects. In addition, when remaining monomers are contained in a predetermined amount, such as 1 to 1000 ppm by weight, preferably 10 to 900 ppm, and more preferably 20 to 800 ppm, based on the entire weight of the composition, the effect of improved flowability during molding can be obtained and good plasticity can be achieved when the resin is melted. Also, in the compositions of the present invention, an aromatic monohydroxy compound, represented by an aryl alcohol such as phenol, may be contained in, for example, more than or not less than 300 ppm by mass, more than or not less than 500 ppm by mass, or more than or not less than 700 ppm by mass.

<II-3. Additive>

The thermoplastic resin composition of the present invention may contain an additive. Examples of the additive include an antioxidant. As the antioxidant, a phosphite-based antioxidant is preferable. Also, the thermoplastic resin composition preferably contains an antioxidant used in the polymerization reaction for production of the polyether resin.

The proportion of the antioxidant to be added in the thermoplastic resin composition is preferably 0.001 parts by

mass or more (about 10 ppm by mass or more), more preferably 0.01 parts by mass or more (about 100 ppm by mass or more), and still more preferably 0.1 parts by mass or more (about 1000 ppm by mass or more), with respect to the entire weight of the composition, 100 parts by weight. Also, the proportion of the antioxidant to be added in the thermoplastic resin composition is preferably 2.0 parts by mass or less, more preferably 1.0 parts by mass or less, still more preferably 0.7 parts by mass or less (about 7,000 ppm by mass or less), and particularly preferably 0.5 parts by mass or less (about 5,000 ppm by mass or less), with respect to the entire weight of the composition, 100 parts by weight.

In the thermoplastic resin composition, only one type of antioxidant may be contained, or two or more types thereof may be contained. When two or more types are contained, it is preferable that the total amount be in the above range.

The thermoplastic resin composition of the present invention may contain the additives described below as secondary components.

Quencher

In the thermoplastic resin of the present invention, the catalyst may be removed or deactivated after the polymerization reaction is terminated in order to retain thermal stability. A method for deactivating the catalyst by addition of a known acidic substance can be suitably performed. As the acidic substance, specifically, esters such as butyl benzoate, aromatic sulfonic acids such as p-toluenesulfonic acid; aromatic sulfonate esters such as butyl p-toluenesulfonate and hexyl p-toluenesulfonate; phosphoric acids such as phosphorous acid, phosphoric acid, and phosphonic acid; phosphite esters such as triphenyl phosphite, monophenyl phosphite, diphenyl phosphite, diethyl phosphite, di-n-propyl phosphite, di-n-butyl phosphite, din-hexyl phosphite, dioctyl phosphite, and monooctyl phosphite; phosphate esters such as triphenyl phosphate, diphenyl phosphate, monophenyl phosphate, dibutyl phosphate, dioctyl phosphate, and monooctyl phosphate; phosphonic acids such as diphenylphosphonic acid, dioctylphosphonic acid, and dibutylphosphonic acid; phosphonate esters such as diethyl phenylphosphonate; phosphines such as triphenylphosphine and bis(diphenylphosphino)ethane; boric acids such as boric acid and phenylboric acid; aromatic sulfonate salts such as tetrabutylphosphonium dodecylbenzenesulfonate salt; organic halides such as stearoyl chloride, benzoyl chloride, and p-toluenesulfonyl chloride; alkylsulfuric acids such as dimethylsulfuric acid; organic halides such as benzyl chloride; and the like are suitably used.

Also, as the quencher for deactivating the catalyst, alkyl acid phosphate metal salts, such as distearyl acid phosphate zinc salt and monostearyl acid phosphate zinc salt, may be used.

The above-mentioned quencher may be used in a molar amount of 0.001 to 50 times, preferably 0.01 to 30 times, with respect to the amount of the catalyst, for example.

To the thermoplastic resin of the present invention, a stabilizer may be added. As the stabilizer, a thermal stabilizer and the above-mentioned antioxidant are exemplified. When compounded, the proportion of the stabilizer to be added is preferably 0.001 parts by mass or more, more preferably 0.01 parts by mass or more, and still more preferably 0.02 parts by mass or more, and also preferably 2 parts by mass or less, more preferably 1.4 parts by mass or less, and still more preferably 1.0 parts by mass or less, with respect to 100 parts by mass of the thermoplastic resin. In the thermoplastic resin composition, only one type of stabilizer may be contained, or two or more types thereof may be contained. When two or more types are contained, it is preferable that the total amount be in the above range.

Examples of the thermal stabilizer may include a phenolic thermal stabilizer, a phosphorus-based thermal stabilizer, and a sulfur-based thermal stabilizer. Specific examples thereof may include oxoacids of phosphorus such as phosphoric acid, phosphonic acid, phosphorous acid, phosphinic acid, and polyphosphoric acid; acid pyrophosphate metal salts such as sodium acid pyrophosphate, potassium acid pyrophosphate, and calcium acid pyrophosphate; phosphate salts of Group 1 or Group 10 metals such as potassium phosphate, sodium phosphate, cesium phosphate, and zinc phosphate; and organic phosphate compounds, organic phosphite compounds, and organic phosphonite compounds. Examples thereof may also include at least one selected from the group of (a) phosphite ester compound in which at least one ester in the molecule is esterified with phenol and/or phenol having at least one alkyl group having 1 to 25 carbon atoms, (b) phosphorous acid, and (c) tetrakis(2,4-di-tert-butylphenyl)-4,4'-biphenylene-di-phosphonite. Specific examples of the (a) phosphite ester compound may include trioctyl phosphite, trioctadecyl phosphite, tridecyl phosphite, trilauryl phosphite, tristearyl phosphite, triphenyl phosphite, tris(monononylphenyl) phosphite, tris(monononyl/dinonylphenyl) phosphite, trisnonylphenyl phosphite, tris(octylphenyl) phosphite, tris(2,4-di-tert-butylphenyl) phosphite, trinonyl phosphite, didecylmonophenyl phosphite, dioctylmonophenyl phosphite, diisopropylmonophenyl phosphite, monobutyldiphenyl phosphite, monodecyldiphenyl phosphite, bis(2,4-di-tert-butylphenyl)pentaerythritol phosphite, bis(2,6-di-tert-butyl-4-methylphenyl)pentaerythritol phosphite, monooctyldiphenyl phosphite, distearylpentaerythritol diphosphite, tricyclohexyl phosphite, diphenylpentaerythritol diphosphite, bis(2,6-di-tert-butyl-4-methylphenyl)pentaerythritol diphosphite, 2,2-methylene bis(4,6-di-tert-butylphenyl)octyl phosphite, bis(nonylphenyl)pentaerythritol diphosphite, bis(2,4-di-tert-butylphenyl)pentaerythritol diphosphite, and bis(2,6-di-tert-butyl-4-ethylphenyl)pentaerythritol diphosphite. They may be used alone, or two or more types may be mixed for use.

Examples of the organic phosphite compound may include "ADK STAB 1178 (trade name, hereinafter the same)," "ADK STAB 2112," and "ADK STAB HP-10" manufactured by ADEKA CORPORATION, "JP-351," "JP-360," and "JP-3CP" manufactured by Johoku Chemical Co., Ltd., and "Irgafos 168" manufactured by BASF SE.

Also, examples of the phosphate ester may include trimethyl phosphate, triethyl phosphate, tributyl phosphate, trioctyl phosphate, triphenyl phosphate, tricresyl phosphate, tris(nonylphenyl) phosphate, and 2-ethylphenyldiphenyl phosphate.

When compounded, the proportion of the thermal stabilizer to be added is preferably 0.001 parts by mass or more, more preferably 0.01 parts by mass or more, and still more preferably 0.03 parts by mass or more, and also preferably 1 part by mass or less, more preferably 0.7 parts by mass or less, and still more preferably 0.5 parts by mass or less, with respect to 100 parts by mass of the thermoplastic resin.

In the thermoplastic resin composition, only one type of thermal stabilizer may be contained, or two or more types thereof may be contained. When two or more types are contained, it is preferable that the total amount be in the above range.

Flame retardant

In the thermoplastic resin of the present invention, various additives may be compounded to the extent not departing from the spirit of the present invention. As the flame retardant, an organometallic salt-based flame retardant, phosphorus-based flame retardant, silicone-based flame retardant, or the like may be compounded. As the flame retardant that can be used in the present invention, the flame retardants (flame retardant compositions) described in paragraphs 0085 to 0093 of Japanese Patent Laid-Open No. 2016-183422 are exemplified, the contents of which are incorporated herein by reference.

Ultraviolet absorber

Examples of the ultraviolet absorber may include, in addition to an inorganic ultraviolet absorber such as cerium oxide and zinc oxide, an organic ultraviolet absorber such as a benzotriazole compound, a benzophenone compound, a salicylate compound, a cyanoacrylate compound, a triazine compound, an oxanilide compound, a malonate ester compound, a hindered amine compound, and a phenyl salicylate-based compound. Among these, benzotriazole-based and benzophenone-based organic ultraviolet absorbers are preferable. In particular, specific examples of the benzotriazole compound may include 2-(2'-hydroxy-5'-methylphenyl)benzotriazole, 2-[2'-hydroxy-3',5'-bis(α,α-dimethylbenzyl)phenyl]-benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5'-di-tert-butyl-phenyl)-5-chlorobenzotriazole, 2-(2'-hydroxy-3',5'-di-tert-amyl)-benzotriazole, 2-(2'-hydroxy-5'-tert-octylphenyl)-benzotriazole, 2,2'-methylene bis[4-(1,1,3,3-tetramethylbutyl)-6-(2N-benzotriazol-2-yl)phenol], 2-(4,6-diphenyl-1,3,5-triazin-2-yl)-5-[(hexyl)oxy]-phenol, 2-[4,6-bis(2,4-dimethylphenyl)-1,3,5-triazin-2-yl]-5-(octyloxy)phenol, 2,2'-(1,4-phenylene) bis[4H-3,1-benzoxazin-4-one], [(4-methoxyphenyl)-methylene]-propanedioic acid-dimethyl ester, 2-(2H-benzotriazol-2-yl)-p-cresol, 2-(2H-benzotriazol-2-yl)-4,6-bis(1-methyl-1-phenylmethyl)phenol, 2-[5-chloro(2H)-benzotriazol-2-yl]-4-methyl-6-(tert-butyl)phenol, 2,4-di-tert-butyl-6-(5-chlorobenzotriazol-2-yl)phenol, 2-(2H-benzotriazol-2-yl)-4-(1,1,3,3-tetrabutyl)phenol, 2,2'-methylene bis [6-(2H-benzotriazol-2-yl)-4-(1,1,3,3-tetrabutyl)phenol], and [methyl-3-[3-tert-butyl-5-(2H-benzotriazol-2-yl)-4-hydroxyphenyl]propionate-polyethylene glycol] condensation product. Among the above, 2-(2'-hydroxy-5'-tert-octylphenyl)benzotriazole and 2,2'-methylene bis[4-(1,1,3,3-tetramethylbutyl)-6-(2N-benzotriazol-2-yl)phenol] are preferable. Also, specific examples of the benzophenone-based ultraviolet absorber may include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, and 2,2',4,4'-tetrahydroxy-benzophenone. In addition, specific examples of the phenyl salicylate-based ultraviolet absorber may include phenyl salicylate and 4-tert-butyl-phenyl salicylate. Furthermore, specific examples of the triazine-based ultraviolet absorber may include 2-(4,6-diphenyl-1,3,5-triazin-2-yl)-5-[(hexyl)oxy]-phenol and 2-[4,6-bis(2,4-dimethylphenyl)-1,3,5-triazin-2-yl]-5-(octyloxy)phenol. Moreover, specific examples of the hindered amine-based ultraviolet absorber include bis(2,2,6,6-tetramethylpiperidin-4-yl) sebacate.

When compounded, the proportion of the ultraviolet absorber to be added is preferably 0.01 parts by mass or more, more preferably 0.1 parts by mass or more, and also preferably 3 parts by mass or less, more preferably 1 part by mass or less, with respect to 100 parts by mass of the thermoplastic resin.

Only one type of ultraviolet absorber may be used, or two or more types of ultraviolet absorbers may be used. When two or more types are used, it is preferable that the total amount be in the above range.

Mold release agent

Examples of the mold release agent may include a mold release agent such as a carboxylate ester, a polysiloxane compound, and a paraffin wax (polyolefin-based). Specific examples thereof may include at least one compound selected from the group of an aliphatic carboxylic acid, an ester of an aliphatic carboxylic acid and an alcohol, an aliphatic hydrocarbon compound with a number average molecular weight of 200 to 15000, and a polysiloxane-based silicone oil. Examples of the aliphatic carboxylic acid may include a saturated or unsaturated, aliphatic monovalent, divalent, or trivalent carboxylic acid. Here, the aliphatic carboxylic acid encompasses an alicyclic carboxylic acid as well. Among these, the preferred aliphatic carboxylic acid is a monovalent or divalent carboxylic acid having 6 to 36 carbon atoms, and an aliphatic saturated monovalent carboxylic acid having 6 to 36 carbon atoms is still more preferable. Specific examples of the aliphatic carboxylic acid may include palmitic acid, stearic acid, valeric acid, caproic acid, capric acid, lauric acid, arachic acid, behenic acid, lignoceric acid, cerotic acid, melissic acid, tetratriacontanoic acid, montanic acid, glutaric acid, adipic acid, and azelaic acid. As the aliphatic carboxylic acid in the ester of an aliphatic carboxylic acid and an alcohol, those that are the same as the above aliphatic carboxylic acids can be used. Meanwhile, examples of the alcohol may include a saturated or unsaturated, monohydric or polyhydric alcohol. These alcohols may have a substituent such as a fluorine atom or an aryl group. Among these, a monohydric or polyhydric, saturated alcohol having 30 or less carbon atoms is preferable, and an aliphatic saturated monohydric alcohol or polyhydric alcohol having 30 or less carbon atoms is still more preferable. Here, the aliphatic compound encompasses an alicyclic compound as well. Specific examples of the alcohol may include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol. Note that the above ester compound may contain the aliphatic carboxylic acid and/or the alcohol as impurities, and may be a mixture of a plurality of compounds. Specific examples of the ester of an aliphatic carboxylic acid and an alcohol may include beeswax (a mixture mainly composed of myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate. Examples of the aliphatic hydrocarbon with a number average molecular weight of 200 to 15000 may include liquid paraffin, paraffin wax, microwax, polyethylene wax, Fischer-Tropsch wax, and oligomer of an $\alpha$-olefin having 3 to 12 carbon atoms. Here, the aliphatic hydrocarbon includes an alicyclic hydrocarbon as well. Also, these hydrocarbon compounds may be partially oxidized. Among these, paraffin wax, polyethylene wax, or a partially oxidized product of polyethylene wax is preferable, and paraffin wax and polyethylene wax are still more preferable. The number average molecular weight is preferably 200 to 5000. These aliphatic hydrocarbons may be a single substance, or it may be a mixture of materials with various constituent components and molecular weights, as long as the main component is in the above range. Examples of the polysiloxane-based silicone oil may include dimethyl silicone oil, phenyl methyl silicone oil, diphenyl silicone oil, and fluorinated alkyl silicone. Two or more types of them may be used in combination.

When compounded, the proportion of the mold release agent to be added is preferably 0.001 parts by mass or more, more preferably 0.01 parts by mass or more, and also preferably 2 parts by mass or less, more preferably 1 part by mass or less, with respect to 100 parts by mass of the thermoplastic resin.

Only one type of mold release agent may be used, or two or more types of mold release agents may be used. When two or more types are used, it is preferable that the total amount be in the above range.

Coloring agent

The coloring agent may be either a dye or a pigment, and examples thereof may include an inorganic pigment, an organic pigment, and an organic dye. Examples of the inorganic pigment may include carbon black, a sulfide-based pigment such as cadmium red and cadmium yellow; a silicate salt-based pigment such as ultramarine blue; an oxide-based pigment such as titanium oxide, zinc oxide, red iron oxide, chromium oxide, iron black, titanium yellow, zinc-iron brown, titanium cobalt green, cobalt green, cobalt blue, copper-chromium black, and copper-iron black; a chromic acid-based pigment such as lead yellow and molybdate orange; and a ferrocyanide-based pigment such as iron blue. In addition, examples of the organic pigment and organic dye as the coloring agent may include a phthalocyanine-based dye/pigment ("dye/pigment" refers to a dye or pigment, hereinafter the same) such as copper phthalocyanine blue and copper phthalocyanine green; an azo dye/pigment such as nickel azo yellow; a condensed polycyclic dye/pigment such as thioindigo-based, perinone-based, perylene-based, quinacridone-based, dioxazine-based, isoindolinone-based, and quinophthalone-based dyes/pigments; and quinoline-based, anthraquinone-based, heterocyclic, and methyl dyes/pigments. Then, among these, titanium oxide, carbon black, cyanine-based, quinoline-based, anthraquinone-based, and phthalocyanine-based dyes/pigments, and the like are preferable from the standpoint of thermal stability.

Also, the coloring agent may be masterbatched for use with polystyrene resin, polycarbonate resin, or acrylic resin for the purpose of improving handling properties during extrusion and improving dispersibility in the resin composition.

When compounded, the proportion of the coloring agent to be added is preferably 5 parts by mass or less, more preferably 3 parts by mass or less, and still more preferably 2 parts by mass or less, and also 0.1 parts by mass or more, with respect to 100 parts by mass of the thermoplastic resin. Only one type of coloring agent may be used, or two or more types of coloring agents may be used. When two or more types are used, it is preferable that the total amount be in the above range.

[III. Molded body]

Next, a molded body according to the present invention, which contains the thermoplastic resin or thermoplastic resin composition of the present invention, will be described.

The molded body according to the present invention contains the above-mentioned thermoplastic resin or thermoplastic resin composition. The molded body is obtained by molding the thermoplastic resin or the thermoplastic resin composition. The molding method for the molded body is not particularly limited, and examples of the molded body include an injection molded product, a press molded product, a blow molded product, an extrusion molded product, a vacuum molded product, and a pressure molded product.

The molded body of the present invention is, for example, an optical lens, an optical film, or the like. The thermoplastic resin or the like of the present invention is suited for optical applications, and the optical lens or optical film has particularly excellent properties. Also, the optical lens that may be included in the molded body has a refractive index, Abbe number, and other properties in the appropriate range.

[IV. Method for producing thermoplastic resin]

<IV-1. Outline of production method>

A method for producing the thermoplastic resin at least includes a step of polymerizing the above-mentioned silane compound as a linking agent, and the fluorene ring-containing dihydroxy compound (component A) and the dinaphthalene-containing dihydroxy compound (component B). The silane compound functions as a supply source for the silane bond moiety, and the component A and component B function as a supply source for their respective corresponding constituent units.

Schematically illustrating the above-mentioned polymerization reaction, it is as follows. For example, when dimethyldiphenoxysilane is used as the silane compound, it reacts with a terminal hydroxyl group of the component A and component B to form the main chain of the thermoplastic resin, and phenol (PhOH) is produced as a by-product. Therefore, in the polymerization step, it is preferable to proceed the polymerization reaction while the mixture of each of the above-mentioned components is melted and the by-product alcohol, such as an aryl alcohol including phenol, is removed under reduced pressure.

<II-2. Ratio of monomers>

In the polymerization process for production of the thermoplastic resin, the ratio of the monomers, silane compound, component A, and component B, is adjusted as appropriate to realize the above-mentioned preferable ratio of constituent units. For example, it is preferable that the molar ratio between the component A and the component B ((A):(B)) be (A):(B) = 30/70 to 95/5. Also, the molar ratio between the component A and the component B is more preferably 40/60 to 92/8, still more preferably 50/50 to 90/10, and particularly preferably 50/50 to 80/20.

It is preferable that the content of the fluorene constituent unit (F) be 30 to 95% by mol based on the total number of moles of the fluorene constituent unit (F) and the dinaphthalene constituent unit (N). The content of the fluorene constituent unit (F) in the total number of moles of the fluorene constituent unit (F) and the dinaphthalene constituent unit (N) is more preferably 40 to 92% by mol, still more preferably 50 to 90% by mol, and particularly preferably 50 to 80% by mol.

In addition, the silane constituent unit (S) is bonded to a terminal of the fluorene constituent unit (F) or the dinaphthalene constituent unit (N), and it is contained in a number of moles approximately equal to the total number of moles of the fluorene constituent unit (F) and the dinaphthalene constituent unit (N). However, in the polymerization step, it is preferable to use the silane compound in excess, to some extent. For example, the number of moles of the silane compound to be polymerized is about 1.0 times to 1.2 times, preferably 1.01 times to 1.1 times, and more preferably 1.02 times to 1.06 times, the total number of moles of the component A and the component B. In this manner, when the amount (number of moles) of the silane compound with respect to the total amount (number of moles) of the fluorene ring-containing dihydroxy compound (component A) and the dinaphthalene-containing dihydroxy compound (component B) is slightly in excess in the polymerization step, the excess silane compound is not used in the polymerization reaction and is removed from the reaction system, whereas the shortage of the silane constituent unit (S) in the thermoplastic resin obtained after polymerization is prevented and the number of moles of the silane constituent unit (S) can be reliably

adjusted to be equal to the total number of moles of the fluorene constituent unit (F) and the dinaphthalene constituent unit (N).

<II-3. Optional monomer>

In the polymerization step for producing the thermoplastic resin, a monomer other than the silane compound, component A, and component B may be used. It is, for example, a monomer for forming the above-mentioned optional constituent unit (Z), or the like.

<II-4. Polymerization catalyst>

Although no catalyst is required to be used in the polymerization step, it is preferable to use, for example, any of the following polymerization catalysts.

First, preferred specific examples of the polymerization catalyst include a metal acetate, such as zinc acetate, lead acetate, manganese acetate, cobalt acetate, aluminum acetate, calcium acetate, potassium acetate, lithium acetate, magnesium acetate, sodium acetate, tin acetate, zirconium acetate, and zirconium acetylacetonate (Zr(acac)), and other metal salts. Among these metal salts, more preferred specific examples of the polymerization catalyst include zinc acetate, lead acetate, manganese acetate, and cobalt acetate.

As the polymerization catalyst, a phosphonium salt or the like can be used, with a quaternary phosphonium salt being preferable. Specific examples of the phosphonium salt as the polymerization catalyst include: an alkyl phosphonium salt, such as tetra-n-butyl phosphonium bromide and tetra-n-butyl phosphonium chloride; an aryl phosphonium salt, such as tetraphenyl phosphonium bromide, tetraphenyl phosphonium chloride, and tetraphenyl phosphonium phenoxide (TPPP); and an alkyl aryl phosphonium salt.

In addition, a catalyst containing a basic compound can also be used as the polymerization catalyst, and examples of the basic compound catalyst include an alkali metal compound and an alkaline earth metal compound, such as an organic acid salt, an inorganic salt such as carbonate, an oxide, a hydroxide, a hydride, and an alkoxide of an alkali metal, an alkaline earth metal compound, and the like. Alternatively, as the basic compound catalyst, a quaternary ammonium hydroxide and a salt thereof, an amine, a phosphazene, and the like are used. These compounds can be used alone, or multiple types of them can be used in combination.

Among the above-mentioned basic compound catalysts, those containing an alkali metal carbonate or an alkali metal hydroxide are more preferable. More preferred specific examples of the catalyst include those containing a metal carbonate, such as cesium carbonate, potassium carbonate, sodium carbonate, and sodium bicarbonate; and those containing a metal hydroxide, such as cesium hydroxide, potassium hydroxide, and sodium hydroxide.

Also, preferred specific examples of the amine catalyst include diazabicycloundecene (DBU: registered trademark), and preferred specific examples of the phosphazene catalyst include BTPP (tert-butyliminotripyrrolidinophosphorane).

Further specific examples of the catalyst in the polymerization reaction include the following.

Examples of the alkali metal compound include sodium hydroxide, potassium hydroxide, lithium hydroxide, cesium hydroxide, sodium bicarbonate, potassium bicarbonate, lithium bicarbonate, cesium bicarbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium borohydride, potassium borohydride, lithium borohydride, cesium borohydride, sodium boron phenylate, potassium boron phenylate, lithium boron phenylate, cesium boron phenylate, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium phenyl phosphate, dipotassium phenyl phosphate, dilithium phenyl phosphate, dicesium phenyl phosphate; an alcoholate and a phenolate of sodium, potassium, lithium, and cesium; and a disodium salt, a dipotassium salt, a dilithium salt, and a dicesium salt of bisphenol A.

Also, examples of the alkaline earth metal compound include calcium hydroxide, barium hydroxide, magnesium hydroxide, strontium hydroxide, calcium bicarbonate, barium bicarbonate, magnesium bicarbonate, strontium bicarbonate, calcium carbonate, barium carbonate, magnesium carbonate, strontium carbonate, calcium acetate, barium acetate, magnesium acetate, strontium acetate, calcium stearate, barium stearate, magnesium stearate, and strontium stearate.

In addition, specific examples of the basic boron compound that can be used as the catalyst in the polymerization step include a sodium salt, a potassium salt, a lithium salt, a calcium salt, a barium salt, a magnesium salt, and a strontium salt of tetramethylboron, tetraethylboron, tetrapropylboron, tetrabutylboron, trimethylethylboron, trimethylbenzylboron, trimethylphenylboron, triethylmethylboron, triethylbenzylboron, triethylphenylboron, tributylbenzylboron, tributylphenylboron, tetraphenylboron, benzyltriphenylboron, methyltriphenylboron, butyltriphenylboron, and the like.

Examples of the basic phosphorus compound that can be used as the catalyst in the polymerization step include

triethylphosphine, tri-n-propylphosphine, triisopropylphosphine, tri-n-butylphosphine, triphenylphosphine, tributylphosphine, and a quaternary phosphonium salt.

Examples of the basic ammonium compound that can be used as the catalyst in the polymerization step include tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, and butyltriphenylammonium hydroxide.

Examples of the amine compound that can be used as the catalyst in the polymerization step include 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, and aminoquinoline.

In addition, those known per se as polymerization catalysts can also be employed, and for example, an antimony compound, a titanium compound, a germanium compound, a tin compound, or an aluminum compound is preferable. Examples of such compounds may include an oxide, an acetate, a carboxylate, a hydride, an alcoholate, a halide, a carbonate, and a sulfate of antimony, titanium, germanium, tin, and aluminum. Furthermore, two or more of these compounds can be used in combination. Among these, tin, titanium, and germanium compounds are preferable from the viewpoint of melt stability and color hue of the thermoplastic resin.

As mentioned above, those known per se can be employed as the catalyst in the polymerization reaction, and for example, compounds containing a manganese, magnesium, titanium, zinc, aluminum, calcium, cobalt, sodium, lithium, or lead element or the like can be used. Specific examples thereof include an oxide, an acetate, a carboxylate, a hydride, an alcoholate, a halide, a carbonate, and a sulfate containing these elements. Among these, compounds such as an oxide, an acetate, and an alcoholate of manganese, magnesium, zinc, titanium, and cobalt are preferable from the viewpoint of melt stability, color hue, and low polymer-insoluble foreign matter of the thermoplastic resin. Furthermore, manganese, magnesium, and titanium compounds are preferable. Two or more of these compounds can be used in combination.

As the catalyst in the polymerization step, a salt of zinc, tin, zirconium, or lead is preferably used, and these can be used alone or in combination. They may also be used in combination with the above-mentioned alkali metal compounds and alkaline earth metal compounds.

As the catalyst in the polymerization step, specifically, zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonate, zirconium oxyacetate, zirconium tetrabutoxide, lead(II) acetate, lead(IV) acetate, zirconium acetate, titanium tetrabutoxide, and the like can be used. Among the above, zinc acetate, zirconium acetate, and titanium tetrabutoxide are preferable, and titanium tetrabutoxide is more preferable.

Note that the above-mentioned catalyst can be prepared by known methods, or those commercially available may be used.

Also, in the thermoplastic resin and the thermoplastic resin composition, the details of which will be described later, it is preferable to substantially completely remove the catalyst, for example, alkali metal compound catalyst and alkaline earth metal compound catalyst.

<II-5. Additive>

In the polymerization reaction for production of the thermoplastic resin, an additive may be used, and an antioxidant is suitably used. In the polymerization step, although the order of mixing is not limited, it is preferable to start the polymerization reaction after not only the silane compound, component A, and component B as monomer compounds, but also an antioxidant is mixed with the monomer compounds in advance. In the polymerization step, it is preferable to polymerize the monomer compounds in the presence of the above-mentioned catalyst.

Examples of the antioxidant may include a phosphite-based additive, a phenolic antioxidant, a hindered phenolic antioxidant, a bisphenolic antioxidant, a polyphenolic antioxidant, and a sulfur-based antioxidant, and it is preferable to use a phosphite-based additive.

Specific examples of the phosphite-based antioxidant may include an organic phosphate compound, an organic phosphite compound, and an organic phosphonite compound. Examples thereof may also include at least one selected from the group of (a) phosphite ester compound in which at least one ester in the molecule is esterified with phenol and/or phenol having at least one alkyl group having 1 to 25 carbon atoms, (b) phosphorous acid, and (c) tetrakis(2,4-di-tert-butylphenyl)-4,4'-biphenylene-di-phosphonite. Specific examples of the (a) phosphite ester compound may include trioctyl phosphite, trioctadecyl phosphite, tridecyl phosphite, trilauryl phosphite, tristearyl phosphite, triphenyl phosphite, tris(monononylphenyl) phosphite, tris(monononyl/dinonyl-phenyl) phosphite, trisnonylphenyl phosphite, tris(octylphenyl) phosphite, tris(2,4-di-tert-butylphenyl) phosphite, trinonyl phosphite, didecylmonophenyl phosphite, dioctylmonophenyl phosphite, diisopropylmonophenyl phosphite, monobutyldiphenyl phosphite, monodecyldiphenyl phosphite, bis(2,4-di-tert-butylphenyl)pentaerythritol phosphite, bis(2,6-di-tert-butyl-4-methylphenyl)pentaerythritol phosphite, monooctyldiphenyl phosphite, distearylpentaerythritol diphosphite, tricyclohexyl phosphite, diphenylpentaerythritol diphosphite, bis(2,6-di-tert-butyl-4-methylphenyl)pentaerythritol diphosphite, 2,2-methylene bis(4,6-di-tert-butylphenyl)octyl phosphite, bis(nonylphenyl)pentaerythritol diphosphite, bis(2,4-di-tert-butylphenyl)pentaerythritol diphosphite, and bis(2,6-di-tert-butyl-4-ethylphenyl)pentaerythritol diphosphite. They may be used alone, or two or more types may be mixed for use.

Examples of the organic phosphite compound may include "ADK STAB 1178 (trade name, hereinafter the same)," "ADK STAB 2112," and "ADK STAB HP-10" manufactured by ADEKA CORPORATION, "JP-351," "JP-360," and "JP-3CP" manufactured by Johoku Chemical Co., Ltd., and "Irgafos 168" manufactured by BASF SE.

Also, examples of the phosphate ester may include trimethyl phosphate, triethyl phosphate, tributyl phosphate, trioctyl phosphate, triphenyl phosphate, tricresyl phosphate, tris(nonylphenyl) phosphate, and 2-ethylphenyldiphenyl phosphate.

Examples of the phenolic antioxidant may include 2,6-di-tert-butyl-4-methylphenol, tris(3,5-di-tert-butyl-4-hydroxybenzyl) isocyanurate, n-octadecyl-3-(3',5'-di-tert-butyl-4'-hydroxyphenyl) propionate, tetrakis[methylene-3-(3,5-di-tert-butyl-4-hydroxyphenyl)propionate]methane, 4,4'-butylidene bis-(3-methyl-6-tertbutylphenol), triethylene glycol-bis [3-(3-tert-butyl-4-hydroxy-5-methylphenyl)propionate], 3,9-bis{2-[3-(3-tert-butyl-4-hydroxy-5-methylphenyl)propionyloxy]-1,1-dimethylethyl}-2,4,8,10-tetraoxaspiro[5,5]undecane, pentaerythritol tetrakis[3-(3,5-di-tert-butyl-4-hydroxyphenyl)propionate], thiodiethylene bis[3-(3,5-di-tert-butyl-4-hydroxyphenyl)propionate], N,N'-hexane-1,6-diyl bis[3-(3,5-di-tert-butyl-4-hydroxyphenylpropionamide)], 2,4-dimethyl-6-(1-methylpentadecyl)phenol, diethyl [[3,5-bis(1,1-dimethylethyl)-4-hydroxyphenyl]methyl]phosphoate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, and 2,6-di-tert-butyl-4-(4,6-bis(octylthio)-1,3,5-triazin-2-ylamino)phenol.

Examples of the phenolic antioxidant may include "Irganox 1010" ((R), hereinafter the same) and "Irganox 1076" manufactured by BASF SE, and "ADK STAB AO-50" and "ADK STAB AO-60" manufactured by ADEKA CORPORATION.

When compounded, the proportion of the antioxidant to be added is preferably 0.001 parts by mass or more, more preferably 0.01 parts by mass or more, and still more preferably 0.05 parts by mass or more, and also preferably 1 part by mass or less, more preferably 0.5 parts by mass or less, and still more preferably 0.3 parts by mass or less or 0.1 parts by mass or less, with respect to 100 parts by mass of the monomer compounds of the thermoplastic resin in total. In addition, the content of phosphorus in the thermoplastic resin due to the phosphite-based antioxidant or the like is also, for example, 1 part by mass or less, more preferably 0.5 parts by mass or less, and still more preferably 0.1 parts by mass or less.

Only one type of antioxidant may be used, or two or more types of antioxidants may be used. When two or more types are used, it is preferable that the total amount be in the above range.

It is also possible to add an antioxidant to the thermoplastic resin produced by the polymerization reaction to produce a thermoplastic resin composition containing the antioxidant. Conventionally, additives are often added after production of the resin in order to prevent thermal history on the additives themselves caused by the polymerization reaction, or to enable adjustment of the amount to be added depending on the purpose of use.

However, according to the method for producing the thermoplastic resin of the present invention, in which an antioxidant is added to the monomer compounds prior to the polymerization reaction, the effect of improving the color hue in the thermoplastic resin to be produced was remarkable.

<II-6. Conditions of polymerization reaction>

In the polymerization reaction by which the above-mentioned monomer compounds are polymerized, the mixture of each of the above components is melted, and while in a molten state, the by-product alcohol derived from the carbonate compound, such as an aryl alcohol including phenol and methanol, is removed under reduced pressure. By setting the reaction conditions in this way, the polymerization reaction can be proceeded efficiently.

In the polymerization step, it is preferable to proceed the polymerization reaction under a pressure of 400 Pa or less. That is, it is preferable that the pressure in the polymerization reaction be in the range of 400 Pa or less.

In the polymerization step, it is preferable to maintain the system at normal pressure without pressure reduction or with little pressure reduction for a certain period of time, and then reduce the pressure in the system to further proceed the polymerization reaction. For example, in the polymerization step, it is preferable to gradually decrease the reaction pressure from the initial atmospheric pressure to 400 Pa or less, such as 40,000 Pa, 27,000 Pa, 24,000 Pa, 20,000 Pa, 16,000 Pa, 8,000 Pa, 4,000 Pa, 2,000 Pa, 400 Pa, and 400 Pa or less or 200 Pa or less. For example, in the polymerization step, the reaction pressure may be reduced in stages from the initial atmospheric pressure to 40,000 Pa, 20,000 Pa, 10,000 Pa, 5,000 Pa, and 200 Pa or less. As described above, the pressure reduction step, in which the pressure in the reaction system is reduced in stages and the pressure reduction degree is improved in the middle of the step, can efficiently remove the by-product alcohol while suppressing the distillation of the raw materials, which is preferable.

The time of the polymerization step can be determined as appropriate, taking into consideration conditions such as the type of target thermoplastic resin, pressure, and temperature. For example, the total time spent for the polymerization step is 5 to 10 hours or less. In more detail, the reaction time before pressure reduction in the reaction system is 0.5 to 3 hours, preferably 1 to 2 hours, and the reaction time after pressure reduction is 1 to 5 hours, preferably 2 to 4 hours.
In the polymerization step, it is preferable that the temperature in the above-mentioned polymerization reaction be in the range of 150 to 300°C. More preferably, the temperature of the polymerization reaction is 160 to 280°C, still more preferably 170 to 270°C, and particularly preferably 180 to 260°C. Also, the preferred temperature range for the polymerization reaction may be 190 to 290°C, 210 to 280°C, 230 to 270°C, 240 to 260°C, or the like.
In the polymerization step, it is preferable that the value of the ratio of the molar amount of the catalyst to the total molar amount of the monomer compounds (molar ratio: that is, the molar amount of the catalyst/the molar amount of the monomer compounds) be $1.0 \times 10^{-7}$ to $1.0 \times 10^{-2}$ (mol/mol: 0.1 to 10000 μmol/mol or $1.0 \times 10^{-4}$ to 10 mmol/mol). The above molar ratio is more preferably $1.0 \times 10^{-7}$ to $2.0 \times 10^{-5}$ mol/mol (or 0.1 to 20 μmol/mol).

## EXAMPLES

<Measurement of weight average molecular weight (Mw) in terms of polystyrene>

The standard curve was created using GPC (gel permeation chromatography) with chloroform as the developing solvent and a standard polystyrene (Shodex STANDARD, SM-105) with a known molecular weight (molecular weight distribution = 1). From the measured standard polystyrene, the elution time and molecular weight value for each peak were plotted and approximated by a cubic equation to form a calibration curve.
Then, based on the obtained calibration curve, the weight average molecular weight (Mw) was determined as the value in terms of polystyrene from the following expression.

[Calculation expression]

$$Mw = \Sigma(W_i \times M_i)/\Sigma(W_i)$$

(In the above expression, i represents the i-th division point when the molecular weight M is divided, $W_i$ represents the i-th weight, and $M_i$ represents the i-th molecular weight. In addition, the molecular weight M represents the molecular weight in terms of polystyrene at the same elution time of the calibration curve.)

[Measurement conditions]

· Apparatus: LabSolutions manufactured by Shimadzu Corporation
· Column: guard column (Shodex GPC K-G 4A) × 1, analytical column (Shodex GPC K-805L) × 2
· Solvent: chloroform (HPLC grade)
· Injection volume: 10 μL
· Sample concentration: 2000 ppm
· Solvent flow rate: 1 mL/min
· Measurement temperature: 40°C
· Detector: RI

<Measurement of content proportion of low molecular weight compound with weight average molecular weight (Mw) of 1,000 or less>

The proportion of a low molecular weight compound with a Mw of 1,000 or less in the polycarbonate resin was calculated from the ratio of the area from a retention time of 20.5 min to 21.5 min/the area from a retention time of 0 min to 21.5 min (GPC area ratio) based on the data obtained by GPC analysis under the above-mentioned conditions.
That is, GPC analysis was carried out under the conditions described in the <Measurement of weight average molecular weight (Mw) in terms of polystyrene> column to measure the content proportion of the low molecular weight compound (B/A × 100 (%)) based on the ratio between the GPC area (A) of the peak with a retention time (holding time) of 21.5 minutes or less, which is thought to correspond to the amount of all compounds contained in the polycarbonate resin sample, and the GPC area (B) of the peak identified during a retention time of 20.5 minutes to 21.5 minutes, which is thought to correspond to the amount of low molecular weight compound with a weight average molecular weight of 1,000 or less.

<Measurement of glass transition temperature (Tg)>

The measurement sample was prepared by accurately weighing 5 to 12 mg of the test specimen into a sample container for Al autosampler (RDC aluminum pan, cylindrical container with a diameter of 6.8 mm and a height of 2.5 mm) and sealing the top of the sample container with a cover for Al autosampler.
The measurement was carried out using a differential scanning calorimeter (DSC) under a nitrogen atmosphere (nitrogen flow rate: 50 ml/min), and 10.0 mg of sapphire was used as the reference material in the reference cell. Then, the measurement sample that had been adjusted to 30°C was heated up to 280°C at 20°C/min and then cooled down to 30°C by cooling at 20°C/min. Thereafter, the temperature was increased to 280°C at 10°C/min to perform the measurement.
Measurement apparatus: differential scanning calorimeter (DSC) (product name "DSC-7020", manufactured by Hitachi High-Tech Science Corporation)

<Method for measuring refractive index (nd)>

Refractive index (nd): For a 3 mm thick rectangular piece made of the polycarbonate copolymer produced in Examples, the refractive index was measured by the method of JIS-K-7142 using an Abbe refractometer.

<Method for measuring Abbe number (vd)>

For a 3 mm thick rectangular piece made of the polycarbonate resin produced in Examples, the refractive indices were measured at wavelengths of 486 nm, 589 nm and 656 nm at 23°C using an Abbe refractometer, and the Abbe number was further calculated using the expression below.

$$\nu d = (nd - 1)/(nF - nC)$$

nd: Refractive index at a wavelength of 589 nm
nC: Refractive index at a wavelength of 656 nm
nF: Refractive index at a wavelength of 486 nm

(Synthesis Example) Synthesis of dimethyldiphenoxysilane (DMDPS)

7.5 g (20.2 mmol, Si molar amount: 101.0 mmol) of decamethylcyclopentasiloxane, 21.6 g (101.0 mmol) of diphenyl carbonate, and 33 mg (0.1 mmol) of cesium carbonate as a catalyst were stirred at 200°C for 60 minutes with replacement to a nitrogen atmosphere.
As a result of analyzing the reaction mixture by 1H-NMR, no peak of protons of methyl groups on silicon based on decamethylcyclopentasiloxane was observed, confirming that the conversion rate of decamethylcyclopentasiloxane was 100%.
Subsequently, after cooling the reaction mixture to 40°C, it was distilled under reduced pressure of 4 hPa at 150°C, thereby obtaining 23.7 g of a colorless oily component.
As a result of analyzing the obtained oily component by 1H-NMR, only the following peaks were observed as peaks of protons of methyl groups on silicon: a peak at 0.378 ppm based on dimethyldiphenoxysilane (DMDPS) and a peak at 0.222 ppm based on 1,1,3,3-tetramethyl-1,3-diphenoxydisiloxane. From the peak area ratio, the molar ratio between dimethyldiphenoxysilane and 1,1,3,3-tetramethyl-1,3-diphenoxydisiloxane was determined to be 98.6:1.4.
The yield of molar amount of dimethyldiphenoxysilane determined from the weight of the obtained oily component and the above molar ratio was 96.0% with respect to the molar amount of silicon atoms contained in decamethylcyclopentasiloxane.
Dimethyldiphenoxysilane (1H-NMR (CDCl3, 500 MHz, $\delta$; ppm) = 0.378 (s; 6H), 6.942, 6.944 (d; 4H), 6.959, 6.961, 6.995 (t; 2H), 7.230, 7.245, 7.257 (t; 4H)).

Example 1

In a 300 ml four-neck flask equipped with a stirrer, 31.51 g (0.0585 mol) of BNEF, 4.08 g (0.0065 mol) of 2NBN, 16.81 g (0.069 mol) of DPDMS (manufactured by Tokyo Chemical Industry Co., Ltd.; hereinafter the same applies), and 60 $\mu$mol/mol of sodium bicarbonate and 6 $\mu$mol/mol of tetraphenylphosphonium phenoxide as catalysts (the catalyst amount is the relative number of moles to the total number of moles of BNEF and 2NBN) were placed, and the inside of the system was replaced to a nitrogen atmosphere. The raw materials were heated and melted at 210°C. After 30 minutes of reaction, the temperature was increased to 230°C, the pressure was reduced to 400 hPa, and the reaction was allowed to proceed

for 60 minutes while methanol distilled from the reaction system was condensed and removed with a condenser tube. Next, the reaction was carried out with the pressure reduced to 200 hPa for 30 minutes, with the temperature increased to 240°C and the pressure reduced to 100 hPa for 20 minutes, with the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 9,991, a refractive index (nd) of 1.683, an Abbe number (vd) of 18.84, and a glass transition temperature (Tg) of 125°C, and the content of a low molecular weight compound with a weight average molecular weight (Mw) of 1,000 or less (hereinafter, also simply referred to as low molecular weight compound) was 3% by weight.

The types and amounts of raw materials and catalysts used in each of Examples and Comparative Examples, including the above-mentioned Example 1, are as shown in Table 1 below.

Example 2a

In a 300 ml four-neck flask equipped with a stirrer, 24.51 g (0.046 mol) of BNEF, 12.23 g (0.020 mol) of 2NBN, 17.13 g (0.070 mol) of DPDMS, and 60 μmol/mol of sodium bicarbonate as a catalyst (the catalyst amount is the relative number of moles to the total number of moles of BNEF and 2NBN) were placed, and the inside of the system was replaced to a nitrogen atmosphere. The raw materials were heated and melted at 210°C. After 30 minutes of reaction, the temperature was increased to 220°C, the pressure was reduced to 600 hPa, and the reaction was allowed to proceed for 45 minutes while methanol distilled from the reaction system was condensed and removed with a condenser tube. Next, the reaction was carried out with the temperature increased to 230°C and the pressure reduced to 400 hPa for 15 minutes, with the temperature increased to 240°C and the pressure reduced to 200 hPa for 10 minutes, with the pressure reduced to 100 hPa for 5 minutes, with the pressure reduced to 50 hPa for 5 minutes, and with the pressure reduced to less than 1 hPa for 120 minutes.

The resulting polysilyl ether resin had a Mw of 5,856, a refractive index (nd) of 1.696, an Abbe number (vd) of 17.20, and a glass transition temperature (Tg) of 129°C, and the content of a low molecular weight compound was 8% by weight.

Example 2b

A polysilyl ether resin was obtained by the same method as in Example 2a, except that 6 μmol/mol of zinc acetate ($Zn(OAc)_2$) was used as a catalyst instead of 60 μmol/mol of sodium bicarbonate (the catalyst amount is the relative number of moles to the total number of moles of BNEF and 2NBN as in Example 2a) and the amount of the silane compound, DPDMS, was slightly reduced.

Example 3

In a 300 ml four-neck flask equipped with a stirrer, 17.51 g (0.033 mol) of BNEF, 20.38 g (0.033 mol) of 2NBN, 17.13 g (0.070 mol) of DPDMS, and 120 μmol/mol of sodium bicarbonate as a catalyst (the catalyst amount is the relative number of moles to the total number of moles of BNEF and 2NBN) were placed, and the inside of the system was replaced to a nitrogen atmosphere. The raw materials were heated and melted at 210°C. After 30 minutes of reaction, the temperature was increased to 220°C, the pressure was reduced to 600 hPa, and the reaction was allowed to proceed for 60 minutes while methanol distilled from the reaction system was condensed and removed with a condenser tube. Next, the reaction was carried out with the temperature increased to 230°C and the pressure reduced to 400 hPa for 30 minutes, with the temperature increased to 240°C and the pressure reduced to 200 hPa for 30 minutes, with the pressure reduced to 100 hPa for 10 minutes, with the pressure reduced to 50 hPa for 10 minutes, and with the pressure reduced to less than 1 hPa for 90 minutes.

The resulting polysilyl ether resin had a Mw of 13,218, a refractive index (nd) of 1.702, an Abbe number (vd) of 16.30, and a glass transition temperature (Tg) of 131°C, and the content of a low molecular weight compound was 9% by weight.

Example 4

In a 300 ml four-neck flask equipped with a stirrer, 31.51 g (0.0585 mol) of BNEF, 3.43 g (0.0065 mol) of DPBN, 16.49 g (0.068 mol) of DPDMS, and 60 μmol/mol of sodium bicarbonate and 6 μmol/mol of tetraphenylphosphonium phenoxide as catalysts (the catalyst amount is the relative number of moles to the total number of moles of BNEF and DPBN) were placed, and the inside of the system was replaced to a nitrogen atmosphere. The raw materials were heated and melted at 210°C. After 30 minutes of reaction, the temperature was increased to 230°C, the pressure was reduced to 400 hPa, and the reaction was allowed to proceed for 30 minutes while methanol distilled from the reaction system was

condensed and removed with a condenser tube. Next, the reaction was carried out with the pressure reduced to 200 hPa for 20 minutes, with the temperature increased to 240°C and the pressure reduced to 100 hPa for 20 minutes, with the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 25,048, a refractive index (nd) of 1.679, an Abbe number (νd) of 19.33, a glass transition temperature (Tg) of 132°C, and the content of a low molecular weight compound was 2% by weight.

Example 5

In a 300 ml four-neck flask equipped with a stirrer, 24.51 g (0.046 mol) of BNEF, 10.28 g (0.020 mol) of DPBN, 16.34 g (0.067 mol) of DPDMS, and 60 μmol/mol of sodium bicarbonate and 6 μmol/mol of tetraphenylphosphonium phenoxide as catalysts (the catalyst amount is the relative number of moles to the total number of moles of BNEF and DPBN) were placed, and the inside of the system was replaced to a nitrogen atmosphere. The raw materials were heated and melted at 210°C. After 30 minutes of reaction, the temperature was increased to 230°C, the pressure was reduced to 400 hPa, and the reaction was allowed to proceed for 50 minutes while methanol distilled from the reaction system was condensed and removed with a condenser tube. Next, the reaction was carried out with the pressure reduced to 200 hPa for 30 minutes, with the temperature increased to 240°C and the pressure reduced to 100 hPa for 20 minutes, with the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 18,761, a refractive index (nd) of 1.681, an Abbe number (νd) of 18.72, and a glass transition temperature (Tg) of 128°C, and the content of a low molecular weight compound was 5% by weight.

Example 6

In a 300 ml four-neck flask equipped with a stirrer, 17.51 g (0.033 mol) of BNEF, 17.13 g (0.033 mol) of DPBN, 16.34 g (0.067 mol) of DPDMS, and 60 μmol/mol of sodium bicarbonate and 6 μmol/mol of tetraphenylphosphonium phenoxide as catalysts (the catalyst amount is the relative number of moles to the total number of moles of BNEF and DPBN) were placed, and the inside of the system was replaced to a nitrogen atmosphere. The raw materials were heated and melted at 210°C. After 30 minutes of reaction, the temperature was increased to 230°C, the pressure was reduced to 400 hPa, and the reaction was allowed to proceed for 60 minutes while methanol distilled from the reaction system was condensed and removed with a condenser tube. Next, the reaction was carried out with the pressure reduced to 200 hPa for 30 minutes, with the temperature increased to 240°C and the pressure reduced to 100 hPa for 20 minutes, with the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 16,182, a refractive index (nd) of 1.683, an Abbe number (νd) of 18.15, and a glass transition temperature (Tg) of 126°C, and the content of a low molecular weight compound was 8% by weight.

Example 7

In a 300 ml four-neck flask equipped with a stirrer, 24.51 g (0.046 mol) of BNEF, 12.23 g (0.020 mol) of 2NBN, 17.13 g (0.070 mol) of DMDPS (one synthesized as described in the above (Synthesis Example) column: hereinafter the same applies), and 60 μmol/mol of sodium bicarbonate and 6 μmol/mol of tetraphenylphosphonium phenoxide as catalysts (the catalyst amount is the relative number of moles to the total number of moles of BNEF and 2NBN) were placed, and the inside of the system was replaced to a nitrogen atmosphere. The raw materials were heated and melted at 210°C. After 30 minutes of reaction, the temperature was increased to 230°C, the pressure was reduced to 300 hPa, and the reaction was allowed to proceed for 30 minutes while phenol distilled from the reaction system was condensed and removed with a condenser tube. Next, the reaction was carried out with the pressure reduced to 250 hPa for 20 minutes, with the pressure reduced to 200 hPa for 10 minutes, with the pressure reduced to 150 hPa for 20 minutes, with the temperature increased to 240°C and the pressure reduced to 100 hPa for 10 minutes, with the pressure reduced to 50 hPa for 10 minutes, and with the pressure reduced to less than 1 hPa for 90 minutes.

The resulting polysilyl ether resin had a Mw of 23,898, a refractive index (nd) of 1.688, an Abbe number (νd) of 16.61, and a glass transition temperature (Tg) of 134°C, and the content of a low molecular weight compound was 4% by weight.

Example 8

In a 300 ml four-neck flask equipped with a stirrer, 17.51 g (0.033 mol) of BNEF, 20.38 g (0.033 mol) of 2NBN, 17.13 g (0.070 mol) of DMDPS, and 60 μmol/mol of sodium bicarbonate and 12 μmol/mol of tetraphenylphosphonium phenoxide as catalysts (the catalyst amount is the relative number of moles to the total number of moles of BNEF and 2NBN) were placed, and the inside of the system was replaced to a nitrogen atmosphere. The raw materials were heated and melted at 210°C. After 30 minutes of reaction, the temperature was increased to 230°C, the pressure was reduced to 300 hPa, and the reaction was allowed to proceed for 30 minutes while phenol distilled from the reaction system was condensed and removed with a condenser tube. Next, the reaction was carried out with the pressure reduced to 250 hPa for 20 minutes, with the pressure reduced to 200 hPa for 10 minutes, with the pressure reduced to 150 hPa for 15 minutes, with the temperature increased to 240°C and the pressure reduced to 100 hPa for 15 minutes, with the pressure reduced to 50 hPa for 10 minutes, and with the pressure reduced to less than 1 hPa for 90 minutes.

The resulting polysilyl ether resin had a Mw of 22,650, a refractive index (nd) of 1.699, an Abbe number (vd) of 15.37, and a glass transition temperature (Tg) of 132°C, and the content of a low molecular weight compound was 6% by weight.

Example 9

In a 300 ml four-neck flask equipped with a stirrer, 19.20 g (0.033 mol) of BPPEF (OPPFL2EO), 20.38 g (0.033 mol) of 2NBN, 16.34 g (0.067 mol) of DPDMS, and 60 μmol/mol of sodium bicarbonate and 6 μmol/mol of tetraphenylphosphonium phenoxide as catalysts (the catalyst amount is the relative number of moles to the total number of moles of BPPEF and 2NBN) were placed, and the inside of the system was replaced to a nitrogen atmosphere. The raw materials were heated and melted at 210°C. After 30 minutes of reaction, the temperature was increased to 230°C, the pressure was reduced to 400 hPa, and the reaction was allowed to proceed for 60 minutes while methanol distilled from the reaction system was condensed and removed with a condenser tube. Next, the reaction was carried out with the pressure reduced to 200 hPa for 30 minutes, with the temperature increased to 240°C and the pressure reduced to 100 hPa for 20 minutes, with the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 14,595, a refractive index (nd) of 1.691, an Abbe number (vd) of 16.95, and a glass transition temperature (Tg) of 128°C, and the content of a low molecular weight compound was 11% by weight.

Example 10

In a 300 ml four-neck flask equipped with a stirrer, 14.27 g (0.033 mol) of BPEF, 20.38 g (0.033 mol) of 2NBN, 16.34 g (0.067 mol) of DPDMS, and 60 μmol/mol of sodium bicarbonate and 6 μmol/mol of tetraphenylphosphonium phenoxide as catalysts (the catalyst amount is the relative number of moles to the total number of moles of BPEF and 2NBN) were placed, and the inside of the system was replaced to a nitrogen atmosphere. The raw materials were heated and melted at 210°C. After 30 minutes of reaction, the temperature was increased to 230°C, the pressure was reduced to 400 hPa, and the reaction was allowed to proceed for 60 minutes while methanol distilled from the reaction system was condensed and removed with a condenser tube. Next, the reaction was carried out with the pressure reduced to 200 hPa for 40 minutes, with the temperature increased to 240°C and the pressure reduced to 100 hPa for 30 minutes, with the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 15,767, a refractive index (nd) of 1.690, an Abbe number (vd) of 17.01, and a glass transition temperature (Tg) of 115°C, and the content of a low molecular weight compound was 10% by weight.

Example 11

In a 300 ml four-neck flask equipped with a stirrer, 31.51 g (0.0585 mol) of BNEF, 2.43 g (0.0065 mol) of BNE, 16.34 g (0.067 mol) of DPDMS, and 60 μmol/mol of sodium bicarbonate as a catalyst (the catalyst amount is the relative number of moles to BNEF and BNE) were placed, and the inside of the system was replaced to a nitrogen atmosphere. The raw materials were heated and melted at 210°C. After 30 minutes of reaction, the temperature was increased to 230°C, the pressure was reduced to 400 hPa, and the reaction was allowed to proceed for 30 minutes while methanol distilled from the reaction system was condensed and removed with a condenser tube. Next, the reaction was carried out with the pressure reduced to 200 hPa for 20 minutes, with the temperature increased to 240°C and the pressure reduced to 100 hPa for 20 minutes, with the pressure reduced to 50 hPa for 10 minutes, and with the pressure reduced to less than 1 hPa for 120

minutes.

The resulting polysilyl ether resin had a Mw of 32,078, a refractive index (nd) of 1.677, an Abbe number (vd) of 19.67, and a glass transition temperature (Tg) of 131°C.

Example 12

In a 300 ml four-neck flask equipped with a stirrer, 24.51 g (0.046 mol) of BNEF, 7.30 g (0.020 mol) of BNE, 16.49 g (0.068 mol) of DPDMS, and 60 μmol/mol of sodium bicarbonate as a catalyst (the catalyst amount is the relative number of moles to BNEF and BNE) were placed, and the inside of the system was replaced to a nitrogen atmosphere. The raw materials were heated and melted at 210°C. After 30 minutes of reaction, the temperature was increased to 230°C, the pressure was reduced to 400 hPa, and the reaction was allowed to proceed for 30 minutes while methanol distilled from the reaction system was condensed and removed with a condenser tube. Next, the reaction was carried out with the pressure reduced to 200 hPa for 20 minutes, with the temperature increased to 240°C and the pressure reduced to 100 hPa for 20 minutes, with the pressure reduced to 50 hPa for 10 minutes, and with the pressure reduced to less than 1 hPa for 120 minutes.

The resulting polysilyl ether resin had a Mw of 33,928, a refractive index (nd) of 1.674, an Abbe number (vd) of 19.84, and a glass transition temperature (Tg) of 119°C.

Example 13

In a 300 ml four-neck flask equipped with a stirrer, 17.51 g (0.033 mol) of BNEF, 12.17 g (0.033 mol) of BNE, 16.34 g (0.067 mol) of DPDMS, and 60 μmol/mol of sodium bicarbonate as a catalyst (the catalyst amount is the relative number of moles to BNEF and BNE) were placed, and the inside of the system was replaced to a nitrogen atmosphere. The raw materials were heated and melted at 210°C. After 30 minutes of reaction, the temperature was increased to 230°C, the pressure was reduced to 400 hPa, and the reaction was allowed to proceed for 30 minutes while methanol distilled from the reaction system was condensed and removed with a condenser tube. Next, the reaction was carried out with the pressure reduced to 200 hPa for 20 minutes, with the temperature increased to 240°C and the pressure reduced to 100 hPa for 20 minutes, with the pressure reduced to 50 hPa for 10 minutes, and with the pressure reduced to less than 1 hPa for 120 minutes.

The resulting polysilyl ether resin had a Mw of 34,308, a refractive index (nd) of 1.670, an Abbe number (vd) of 19.95, and a glass transition temperature (Tg) of 109°C.

Comparative Example 1

In a 300 ml four-neck flask equipped with a stirrer, 70.00 g (0.130 mol) of BNEF, 34.25 g (0.140 mol) of DPDMS, and 60 μmol/mol of sodium bicarbonate as a catalyst (the catalyst amount is the relative number of moles to BNEF) were placed, and the inside of the system was replaced to a nitrogen atmosphere. The raw materials were heated and melted at 210°C. After 60 minutes of reaction, the temperature was increased to 220°C, the pressure was reduced to 600 hPa, and the reaction was allowed to proceed for 30 minutes while methanol distilled from the reaction system was condensed and removed with a condenser tube. Next, the reaction was carried out with the temperature increased to 230°C and the pressure reduced to 400 hPa for 30 minutes, with the temperature increased to 240°C for 30 minutes, with the temperature increased to 250°C and the pressure reduced to 200 hPa for 20 minutes, with the pressure reduced to 100 hPa for 20 minutes, with the pressure reduced to 50 hPa for 10 minutes, and with the pressure reduced to less than 1 hPa for 90 minutes.

The resulting polysilyl ether resin had a Mw of 20,890, a refractive index (nd) of 1.677, an Abbe number (vd) of 19.72, and a glass transition temperature (Tg) of 131°C, and the content of a low molecular weight compound was 0% by weight.

Comparative Example 2

In a 300 ml four-neck flask equipped with a stirrer, 37.73 g (0.070 mol) of BNEF, 19.47 g (0.0798 mol) of DMDPS, and 30 μmol/mol of sodium bicarbonate as a catalyst (the catalyst amount is the relative number of moles to BNEF) were placed, and the inside of the system was replaced to a nitrogen atmosphere. The raw materials were heated and melted at 210°C. After 30 minutes of reaction, the pressure was reduced to 300 hPa, and the reaction was carried out for 10 minutes. Thereafter, the temperature was increased in stages to 260°C and the pressure was reduced in stages to less than 1 hPa over 80 minutes, and the reaction was allowed to proceed while phenol distilled from the reaction system was condensed and removed with a condenser tube. Furthermore, the reaction was carried out under conditions of 260°C and less than 1 hPa for 101 minutes.

The resulting polysilyl ether resin had a Mw of 39,359, a refractive index (nd) of 1.667, an Abbe number (vd) of 19.18, and a glass transition temperature (Tg) of 138°C, and the content of a low molecular weight compound was 0% by weight.

Comparative Example 3

In a 300 ml four-neck flask equipped with a stirrer, 76.69 g (0.130 mol) of BPPEF (OPPFL2EO), 33.31 g (0.137 mol) of DPDMS, and 15 μmol/mol of sodium bicarbonate as a catalyst (the catalyst amount is the relative number of moles to BPPEF) were placed, and the inside of the system was replaced to a nitrogen atmosphere. The raw materials were heated and melted at 210°C. After 60 minutes of reaction, the temperature was increased to 220°C, the pressure was reduced to 600 hPa, and the reaction was allowed to proceed for 30 minutes while methanol distilled from the reaction system was condensed and removed with a condenser tube. Next, the reaction was carried out with the temperature increased to 230°C and the pressure reduced to 400 hPa for 30 minutes, with the temperature increased to 240°C and the pressure reduced to 200 hPa for 20 minutes, with the pressure reduced to 100 hPa for 20 minutes, with the pressure reduced to 50 hPa for 10 minutes, and with the pressure reduced to less than 1 hPa for 90 minutes.

The resulting polysilyl ether resin had a Mw of 15,349, a refractive index (nd) of 1.657, an Abbe number (vd) of 21.90, and a glass transition temperature (Tg) of 123°C, and the content of a low molecular weight compound was 1% by weight.

Comparative Example 4

In a 300 ml four-neck flask equipped with a stirrer, 31.00 g (0.071 mol) of BPEF, 18.98 g (0.078 mol) of DPDMS, and 15 μmol/mol of cesium carbonate as a catalyst (the catalyst amount is the relative number of moles to BPEF) were placed, and the inside of the system was replaced to a nitrogen atmosphere. The raw materials were heated and melted at 190°C. After 30 minutes of reaction, the temperature was increased to 210°C, the pressure was reduced to 600 hPa, and the reaction was carried out for 16 minutes. Thereafter, the temperature was increased in stages to 260°C and the pressure was reduced in stages to less than 1 hPa over 54 minutes, and the reaction was allowed to proceed while methanol distilled from the reaction system was condensed and removed with a condenser tube. Furthermore, the reaction was carried out under conditions of 260°C and less than 1 hPa for 90 minutes.

The resulting polysilyl ether resin had a Mw of 46,225, a refractive index (nd) of 1.643, an Abbe number (vd) of 23.92, and a glass transition temperature (Tg) of 97°C, and the content of a low molecular weight compound was 0% by weight.

Comparative Example 5

In a 300 ml four-neck flask equipped with a stirrer, 40.76 g (0.065 mol) of 2NBN, 17.13 g (0.070 mol) of DPDMS, and 60 μmol/mol of sodium bicarbonate as a catalyst (the catalyst amount is the relative number of moles to 2NBN) were placed, and the inside of the system was replaced to a nitrogen atmosphere. The raw materials were heated and melted at 210°C. After 60 minutes of reaction, the temperature was increased to 220°C, the pressure was reduced to 600 hPa, and the reaction was allowed to proceed for 20 minutes while methanol distilled from the reaction system was condensed and removed with a condenser tube. Next, the reaction was carried out with the temperature increased to 230°C and the pressure reduced to 400 hPa for 30 minutes, with the temperature increased to 240°C and the pressure reduced to 200 hPa for 20 minutes, with the pressure reduced to 100 hPa for 10 minutes, with the pressure reduced to 50 hPa for 10 minutes, and with the pressure reduced to less than 1 hPa for 90 minutes.

The resulting polysilyl ether resin had a Mw of 3,876, a refractive index (nd) of 1.727, an Abbe number (vd) of 13.80, and a glass transition temperature (Tg) of 143°C, and the content of a low molecular weight compound was 18% by weight.

The raw materials and catalysts used in each of Examples and Comparative Examples and the amounts thereof are as shown in the Table 1 and chemical formulas below. In Table 1, for the silane compound, the component A, and the component B, the numerical value of the amount charged corresponding to a relative molar ratio is shown. That is, the amount of each of the component A and the component B in their total is shown in % by mol, and the relative amount of the silane compound charged relative to the molar amount (100%), which is the total amount of the component A and the component B charged, is also shown in % by mol. In Table 1, which shows the amount charged in this manner, it is thought that most of the excess silane compound exceeding 100 (mol%) was not used in the polymerization reaction, and was removed from the reaction system. However, there are some cases in which the constituent unit derived from the silane compound may be slightly in excess of the diol-derived constituent unit in the thermoplastic resin to be produced.

Therefore, the ratios of the constituent units in the thermoplastic resin produced in each of Examples and Comparative Examples are as follows. That is, it can be said that, with respect to 100% by mol of the silane constituent unit

(S), the fluorene constituent unit (F) and the dinaphthalene constituent unit (N) were formed in the value (% by mol) shown in the "component A (mol%)" column in Table 1 and in the value (% by mol) shown in the "component B (mol%)" column in Table 1, respectively.

[Table 1]

| | Silane compound (mol%) (Linking agent) | | Component A (mol%) | | | Component B (mol%) | | | Physical properties | | | | |
|---|---|---|---|---|---|---|---|---|---|---|---|---|---|
| | DPDMS (-Si(Ph)$_2$-) | DMDPS (-Si(Me)$_2$-) | BNEF | BPPEF | BPEF | 2NBN | DPBHBNA | BNE | nd | vd | Tg (°C) | Mw | Low molecular weight compound (% by weight) |
| Example 1 | 106 | 0 | 90 | 0 | 0 | 10 | 0 | 0 | 1.683 | 18.8 | 125 | 10000 | 3 |
| Example 2 | 106 | 0 | 70 | 0 | 0 | 30 | 0 | 0 | 1.696 | 17.2 | 129 | 6000 | 8 |
| Example 2-1 | 102 | 0 | 70 | 0 | 0 | 30 | 0 | 0 | 1.693 | 17.4 | 137 | 39000 | 6 |
| Example 3 | 106 | 0 | 50 | 0 | 0 | 50 | 0 | 0 | 1.702 | 16.3 | 131 | 13000 | 9 |
| Example 4 | 105 | 0 | 90 | 0 | 0 | 0 | 10 | 0 | 1.679 | 19.3 | 132 | 25000 | 2 |
| Example 5 | 102 | 0 | 70 | 0 | 0 | 0 | 30 | 0 | 1.681 | 18.7 | 128 | 19000 | 5 |
| Example 6 | 102 | 0 | 50 | 0 | 0 | 0 | 50 | 0 | 1.683 | 18.2 | 126 | 16000 | 8 |
| Example 7 | 0 | 106 | 70 | 0 | 0 | 30 | 0 | 0 | 1.688 | 16.6 | 134 | 24000 | 4 |
| Example 8 | 0 | 106 | 50 | 0 | 0 | 50 | 0 | 0 | 1.699 | 15.4 | 132 | 23000 | 6 |
| Example 9 | 102 | 0 | 0 | 50 | 0 | 50 | 0 | 0 | 1.691 | 17 | 128 | 15000 | 11 |
| Example 10 | 102 | 0 | 0 | 0 | 50 | 50 | 0 | 0 | 1.69 | 17 | 115 | 16000 | 10 |
| Example 11 | 102 | 0 | 90 | 0 | 0 | 0 | 0 | 10 | 1.677 | 19.7 | 131 | 32000 | 1 |
| Example 12 | 102 | 0 | 70 | 0 | 0 | 0 | 0 | 30 | 1.674 | 19.8 | 119 | 34000 | 4 |
| Example 13 | 102 | 0 | 50 | 0 | 0 | 0 | 0 | 50 | 1.67 | 20 | 109 | 34000 | 7 |
| Comparative Example 1 | 108 | 0 | 100 | 0 | 0 | 0 | 0 | 0 | 1.677 | 19.7 | 131 | 21000 | 0 |
| Comparative Example 2 | 0 | 114 | 100 | 0 | 0 | 0 | 0 | 0 | 1.667 | 19.2 | 138 | 39000 | 0 |
| Comparative Example 3 | 105 | 0 | 0 | 100 | 0 | 0 | 0 | 0 | 1.657 | 21.9 | 123 | 15000 | 1 |
| Comparative Example 4 | 110 | 0 | 0 | 0 | 100 | 0 | 0 | 0 | 1.643 | 23.9 | 97 | 46000 | 0 |
| Comparative Example 5 | 106 | 0 | 0 | 0 | 0 | 100 | 0 | 0 | 1.727 | 13.8 | 143 | 3900 | 18 |

The results of the above-mentioned Examples and Comparative Examples confirmed that the thermoplastic resin compositions of the present invention have excellent optical characteristics (refractive index and Abbe number) and high moldability (Tg in an appropriate range).

Furthermore, the thermoplastic resin compositions of Examples are anticipated to be suitably used as materials for high hardness resin layers. In addition, since they are expected to have low water absorption and good dimensional stability, they could be utilized in applications where water absorbency is suppressed. The thermoplastic resin compositions of the present invention, which contain a Si element in the silyl ether bond moiety, are also thought to be excellent in flame retardancy. Furthermore, the thermoplastic resin compositions of the present invention having an isosorbide skeleton can exhibit high strength, which can enable improvement in various mechanical strengths when producing molded bodies.

When comparing each of Examples with Comparative Examples 1 and 2, it is thought that a high refractive index is realized mainly due to the inclusion of the component B. In addition, a higher refractive index was achieved in Examples where the component B was used together with BPPEF or BPEF, compared to Comparative Examples 3 and 4.

In Examples where a specific low molecular weight compound is contained only in an appropriate amount, it can be said that the plasticity is high and the moldability is improved. As described above, according to the thermoplastic resin compositions containing a specific low molecular weight compound in an appropriate amount, it is further possible to realize good miscibility with the thermoplastic resin without adding a plasticizer, and to prevent contamination of the metal mold at the time of molding processing.

The names, abbreviations, and other details of the compounds used in Examples and Comparative Examples are as follows.

(Component A)

BPEF: 9,9-Bis(4-(2-hydroxyethoxy)phenyl)fluorene

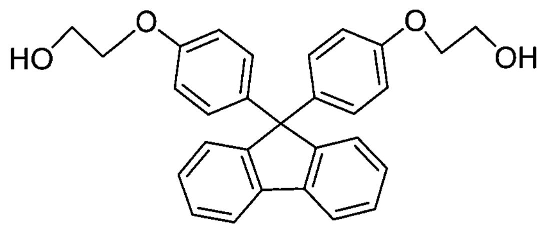

BPPEF: 9,9-Bis(4-(2-hydroxyethoxy)-3-phenylphenyl)fluorene

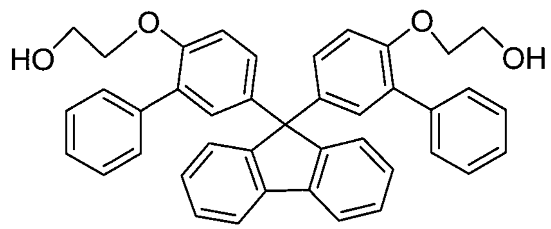

BNEF: 9,9-Bis[6-(2-hydroxyethoxy)naphthalen-2-yl]fluorene

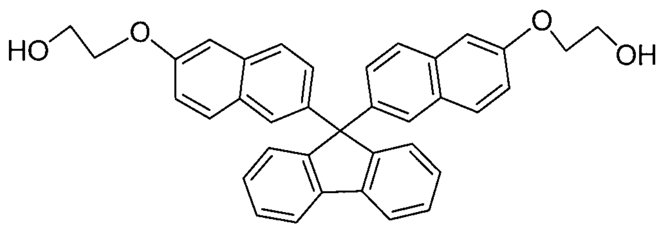

(Component B)

2NBN: 2,2'-Bis(2-hydroxyethoxy)-6,6'-di(naphthalen-2-yl)-1,1'-binaphthalene

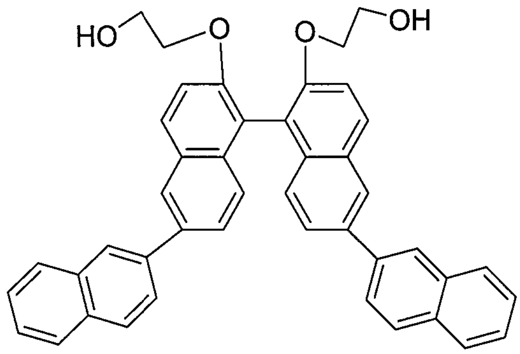

DPBN: 2,2'-Bis(2-hydroxyethoxy)-6,6'-diphenyl-1,1'-binaphthalene

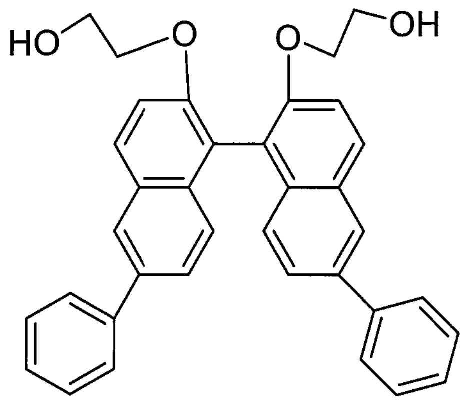

BNE: 2,2'-Bis(2-hydroxyethoxy)-1,1'-binaphthalene

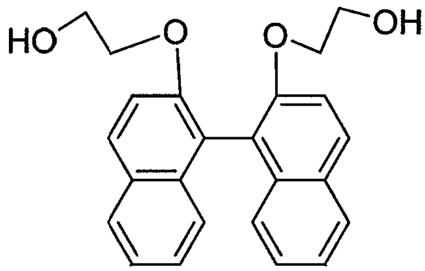

(Silane compound)

DPDMS: Diphenyldimethoxysilane

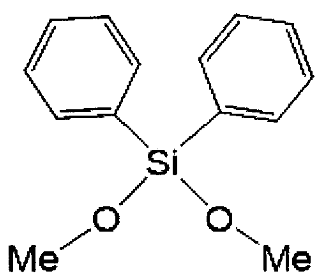

DMDPS: dimethyldiphenoxysilane

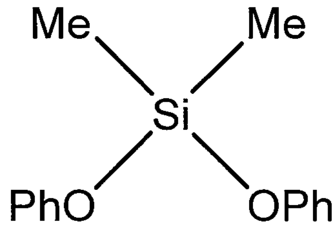

## Claims

1. A thermoplastic resin comprising:

a silane constituent unit (S), which is a constituent unit derived from at least any silane compound of
a dialkoxysilane compound including at least any of a dialkyldialkoxysilane, a diaryldialkoxysilane, and a monoalkylmonoaryldialkoxysilane,
a diaryloxysilane compound including at least any of a dialkyldiaryloxysilane, a diaryldiaryloxysilane, and a monoalkylmonoaryldiaryloxysilane, and
a monoalkoxymonoaryloxysilane compound including at least any of a dialkylmonoalkoxymonoaryloxysilane, a diarylmonoalkoxymonoaryloxysilane, and a monoalkylmonoarylmonoalkoxymonoaryloxysilane compound;
a fluorene constituent unit (F), which is a constituent unit derived from a fluorene ring-containing dihydroxy compound; and
a dinaphthalene constituent unit (N), which is a constituent unit derived from a dinaphthalene-containing dihydroxy compound.

2. The thermoplastic resin according to claim 1, comprising a constituent unit represented by the following general formula (1):

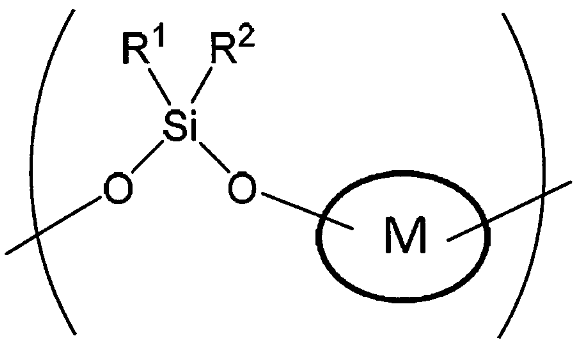

(1)

wherein $R^1$ and $R^2$ each independently represent an alkyl group having 1 to 20 carbon atoms and optionally having a substituent or an aryl group having 6 to 30 carbon atoms and optionally having a substituent;
M represents a dihydroxy compound-derived constituent unit (A); and
the constituent unit (A) comprises the fluorene constituent unit (F) and the dinaphthalene constituent unit (N).

3. The thermoplastic resin according to claim 1, wherein the dinaphthalene-containing dihydroxy compound is represented by the following general formula (2):

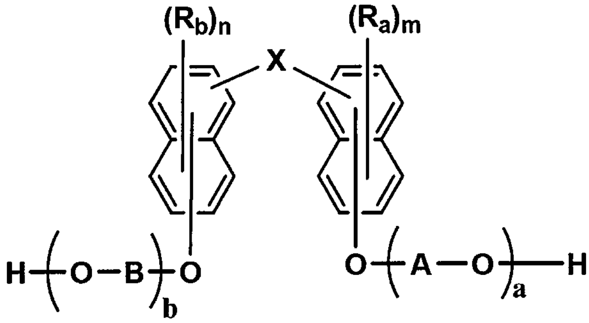

(2)

wherein $R_a$ and $R_b$ are each independently selected from the group consisting of a hydrogen atom, a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, an aryl group having 6 to 20 carbon atoms and optionally having a substituent, a heteroaryl group having 6 to 20 carbon atoms and optionally having a substituent, which contains one or more heterocycle atoms selected from O, N, and S, an aryloxy group having 6 to 20 carbon atoms and optionally having a substituent, and $-C\equiv C-R_h$;

$R_h$ represents an aryl group having 6 to 20 carbon atoms and optionally having a substituent, or a heteroaryl group having 6 to 20 carbon atoms and optionally having a substituent, which contains one or more heterocycle atoms selected from O, N, and S;

X represents a single bond or a fluorene group optionally having a substituent;

A and B each independently represent an alkylene group having 1 to 5 carbon atoms and optionally having a substituent;

m and n each independently represent an integer of 0 to 6; and

a and b each independently represent an integer of 0 to 10.

4. The thermoplastic resin according to claim 1, wherein the fluorene ring-containing dihydroxy compound is represented by the following general formula (3):

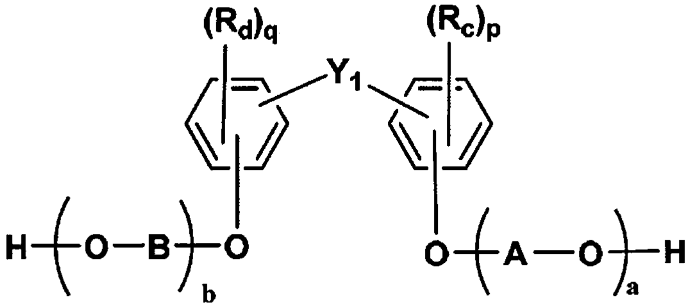

(3)

wherein $R_c$ and $R_d$ are each independently selected from the group consisting of a hydrogen atom, a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, and an aryl group having 6 to 20 carbon atoms and optionally having a substituent;

$Y_1$ represents a fluorene group;

A and B each independently represent an alkylene group having 1 to 5 carbon atoms and optionally having a substituent;

p and q each independently represent an integer of 0 to 4; and

a and b each independently represent an integer of 0 to 10.

5. The thermoplastic resin according to claim 1, wherein the silane constituent unit (S) comprises a constituent unit derived from any of diphenyldimethoxysilane or dimethyldiphenoxysilane.

**6.** The thermoplastic resin according to claim 3, wherein the compound of the general formula (2) includes any of 2NBN and DPBN.

**7.** The thermoplastic resin according to claim 4, wherein the compound of the general formula (3) includes any of BNEF, BPEF, and BPPEF.

**8.** The thermoplastic resin according to claim 1, wherein a content of the fluorene constituent unit (F) is 30 to 95% by mol and a content of the dinaphthalene constituent unit (N) is 5 to 70% by mol based on a total number of moles of the fluorene constituent unit (F) and the dinaphthalene constituent unit (N).

**9.** The thermoplastic resin according to claim 1, wherein the thermoplastic resin has a weight average molecular weight (Mw) in terms of polystyrene of 5,000 to 100,000.

**10.** The thermoplastic resin according to claim 1, wherein the thermoplastic resin has a refractive index (nD) of 1.670 to 1.750.

**11.** The thermoplastic resin according to claim 1, wherein the thermoplastic resin has an Abbe number (v) of 15.0 to 23.0.

**12.** The thermoplastic resin according to claim 1, wherein the thermoplastic resin has a glass transition temperature of 100 to 150°C.

**13.** A thermoplastic resin composition comprising the thermoplastic resin according to claim 1 and a low molecular weight body with a weight average molecular weight (Mw) of 1,000 or less, wherein a content of the low molecular weight body is 15% by mass or less based on an area ratio in GPC analysis.

**14.** The thermoplastic resin composition according to claim 13, wherein the thermoplastic resin contains a low molecular weight body represented by the following general formula (T):

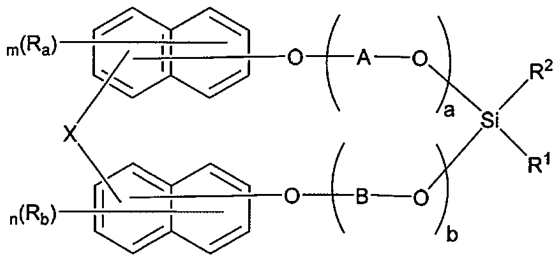

(T)

wherein $R^1$ and $R^2$ each independently represent an alkyl group having 1 to 20 carbon atoms and optionally having a substituent or an aryl group having 6 to 30 carbon atoms and optionally having a substituent;
$R_a$ and $R_b$ are each independently selected from the group consisting of a hydrogen atom, a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, an aryl group having 6 to 20 carbon atoms and optionally having a substituent, a heteroaryl group having 6 to 20 carbon atoms and optionally having a substituent, which contains one or more heterocycle atoms selected from O, N, and S, an aryloxy group having 6 to 20 carbon atoms and optionally having a substituent, and $-C\equiv C-R_h$;
$R_h$ represents an aryl group having 6 to 20 carbon atoms and optionally having a substituent, or a heteroaryl group having 6 to 20 carbon atoms and optionally having a substituent, which contains one or more heterocycle atoms selected from O, N, and S;
X represents a single bond or a fluorene group optionally having a substituent;
A and B each independently represent an alkylene group having 1 to 5 carbon atoms and optionally having a substituent;
m and n each independently represent an integer of 0 to 6; and
a and b each independently represent an integer of 0 to 10.

**15.** A molded body comprising the thermoplastic resin according to claim 1 or the thermoplastic resin composition according to claim 13.

**16.** The molded body according to claim 15, wherein the molded body is an optical lens.

**17.** A method for producing the thermoplastic resin according to claim 1, wherein the method comprises:
a polymerization step of polymerizing the silane compound, the fluorene ring-containing dihydroxy compound, and the dinaphthalene-containing dihydroxy compound in the presence of a polymerization catalyst.

**18.** The method for producing the thermoplastic resin according to claim 17, wherein the polymerization catalyst comprises at least a metal acetate.

## INTERNATIONAL SEARCH REPORT

International application No.
**PCT/JP2023/043417**

**A. CLASSIFICATION OF SUBJECT MATTER**

***C08G 77/60***(2006.01)i; ***G02B 1/04***(2006.01)i
FI: C08G77/60; G02B1/04

According to International Patent Classification (IPC) or to both national classification and IPC

**B. FIELDS SEARCHED**

Minimum documentation searched (classification system followed by classification symbols)

C08G77/00-77/62; G02B1/00-1/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2020/196343 A1 (MITSUBISHI GAS CHEMICAL COMPANY, INC.) 01 October 2020 (2020-10-01)<br>claims, example columns (for example “example 26”), etc. | 1-5, 7-18<br>6 |
| X<br>A | JP 2011-32475 A (CHEIL INDUSTRIES INC.) 17 February 2011 (2011-02-17)<br>claims, column of examples, etc. | 1-5, 7-18<br>6 |

☐ Further documents are listed in the continuation of Box C. ☑ See patent family annex.

* Special categories of cited documents:
“A” document defining the general state of the art which is not considered to be of particular relevance
“D” document cited by the applicant in the international application
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **14 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/043417**

| Patent document cited in search report | Publication date (day/month/year) | Patent family member(s) | Publication date (day/month/year) |
|---|---|---|---|
| WO 2020/196343 A1 | 01 October 2020 | US 2022/0033655 A1<br>claims, example columns (for example “example 26”), etc. | |
| | | US 2022/0169788 A1 | |
| | | EP 3943525 A1 | |
| | | EP 3992228 A1 | |
| | | EP 4177291 A1 | |
| | | EP 4177292 A1 | |
| | | EP 4177293 A1 | |
| | | CN 113614144 A | |
| | | KR 10-2021-0146323 A | |
| | | CN 115926169 A | |
| | | TW 202104349 A | |
| JP 2011-32475 A | 17 February 2011 | US 2011/0027722 A1<br>claims, column of examples, etc. | |
| | | KR 10-2011-0013332 A | |
| | | TW 201120578 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8502537 W
- JP 2015512999 W
- JP 2016183422 A